(19) Europäisches Patentamt
European Patent Office
Office européen des brevets

(11) **EP 2 208 019 B1**

(12) **EUROPÄISCHE PATENTSCHRIFT**

(45) Veröffentlichungstag und Bekanntmachung des Hinweises auf die Patenterteilung:
**26.06.2013  Patentblatt 2013/26**

(21) Anmeldenummer: **08845083.8**

(22) Anmeldetag: **31.10.2008**

(51) Int Cl.:
***G01C 15/02*** *(2006.01)*     ***G01C 21/16*** *(2006.01)*
***G01S 5/14*** *(2006.01)*      ***E01C 19/00*** *(2006.01)*

(86) Internationale Anmeldenummer:
**PCT/CH2008/000458**

(87) Internationale Veröffentlichungsnummer:
**WO 2009/055955 (07.05.2009 Gazette 2009/19)**

(54) **VERFAHREN UND VORRICHTUNG ZUR BESTIMMUNG EINES OBJEKTES AUS HYBRIDEN MESSUNGEN**

METHOD AND DEVICE FOR DETERMINING AN OBJECT FROM HYBRID MEASUREMENTS

PROCÉDÉ ET DISPOSITIF DE DÉTERMINATION D'UN OBJET À PARTIR DE MESURES HYBRIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.11.2007  CH 16942007**

(43) Veröffentlichungstag der Anmeldung:
**21.07.2010  Patentblatt 2010/29**

(73) Patentinhaber: **Kuster, Pius**
**8125 Zollikerberg (CH)**

(72) Erfinder: **Kuster, Pius**
**8125 Zollikerberg (CH)**

(56) Entgegenhaltungen:
**EP-A- 1 079 029        EP-A- 1 837 627**
**US-A1- 2005 197 755    US-A1- 2007 052 951**
**US-B1- 6 727 849**

## Beschreibung

### Technisches Gebiet

Die vorliegende Erfindung betrifft ein Verfahren aus dem Gebiet der geodätischen oder metrologischen Messtechnik, insbesondere ein Verfahren und eine Vorrichtung zur Lagebestimmung von physischen Objekten mittels eines hybrid zusammengesetzten geodätischen Messsystemes mit zu Überbestimmung führenden Eingangsmessgrössen und anschliessender Ausgleichung nach der Methode der kleinsten Residuen. Das erfindungsgemässe Verfahren eignet sich zur einmaligen oder wiederholten Lagebestimmung eines körperlichen Objektes, beispielsweise einer mobilen Baumaschine mit einem assoziierten Werkzeug welches physisch in eine Soll-Arbeitsposition zu bringen ist, ferner zur Überwachung von Bereichen der Erdoberfläche wie beispielsweise geologisch, tektonisch oder vulkanisch instabilen Zonen, Abbaugebieten oder Bauwerken.

### Stand der Technik

Das Durchführen von Lagebestimmungen von Objekten oder Teilen der Erdoberfläche stellt seit jeher eine Hauptaufgabe der geodätischen oder metrologischen Messtechnik dar. Mit der Entwicklung von neuartigen computergestützten Messverfahren oder - sensoren (GPS, Laserdistanzmesser, Theodolite mit automatischer Zielerfassung) wurde die Erhebung und die Weiterverarbeitung revolutioniert, was bis anhin unerschlossene Anwendungsbereiche ermöglicht hat. Im Stand der Technik sind Verfahren zur Steuerung von Baumaschinen in Echtzeit bekannt, welche wirtschaftliche und rationelle Bauverfahren im Tief- und Strassenbau ermöglichen. Immer grössere und leistungsfähigere Baumaschine, welche automatisch gemäss den Projektvorgaben hochgenau navigiert werden können, kommen dabei zum Einsatz. Bisher tasteten sich die Baumaschinen an aufwendig abgesteckten Leitdrähten den angestrebten Achsen entlang, was den gesamten Bauprozess enorm behinderte. Eine neue Generation von Maschinensteuerungen basiert auf vermessungstechnisch gestützte Messverfahren (GPS-Technologie und Theodolite mit automatischer Zielerfassung), welche die leitdrahtlose Bestimmung Führung einer Baumaschine entlang einer Trajektorie in Echtzeit und mit hoher Genaulgkeit erlauben.

Zahlreiche Positionier- oder Navigationssysteme unter Zuhilfenahme von Positionsdetektionsverfahren (z. B. Loran), Triangulationsverfahren (z. B. Rotationslaser, Radarmessinstrumente oder satellitengestützte Systeme wie GPS/DGPS/RTKGPS oder GLO-NASS) sind im Stand der Technik bekannt und in der alltäglichen Messpraxis eingeführt. Obschon mit der verbreiteten und bekannten GPS-Technologie ein universelles, global einsetzbares Messsystem verfügbar ist, sind viele Anforderungen aus der Mess- oder Baupraxis, unter ausschliesslicher Zuhilfenahme der GPS-Technologie, nicht erfüllbar. Soll beispielsweise die räumliche Lage eines Objektes bestimmt werden, sind aufgrund der sechs Freiheitsgrade mindestens zwei mit dem Objekt verbundene GPS-Empfänger notwendig. Die zu erwartende Genauigkeit in der X,Y-Ebene liegt im cm-Bereich, die in der Z-Ebene erzielbare Genauigkeit ist jedoch ungefähr dreimal schlechter, was für zahlreiche Anwendungen im Bauwesen nicht ausreicht. Zudem sind zwei hochgenaue GPS-Empfänger, die benötigte Referenzstation nicht eingerechnet, in Anbetracht des erreichten Genauigkeitsgewinnes und den hohen Empfängerkosten, oft nicht mehr wirtschaftlich vertretbar.

Im Anwendungsbereich zur Überwachung von Bereichen der Erdoberfläche oder generell in Monitoringanwendungen, sind die gleichen Grundprobleme anzutreffen. In den oftmals schwer zugänglichen und unwirtlichen Bereichen, in welchen Deformations- oder Rutschungsmessungen durchgeführt werden sollen, kann oftmals nur minimaler Messaufwand getrieben werden. Da die zu untersuchenden Deformationen oder Bewegungen sich oft im mm- oder cm-Bereich abzeichnen, sind hohe Genauigkeitsanforderungen zu erfüllen damit die Analyse und eine darauf abgestützte zuverlässige Alarmierung durchgeführt werden kann.

In der Praxis bedient man sich deshalb zunehmend sogenannt hybrider Messsysteme. Dazu werden verschiedenartige Messsensoren oder -systeme zu einem Gesamtsystem vereint bzw. derart ausgelegt, dass die hybriden Sensoren gemäss ihren individuellen Vorzügen eingesetzt werden und im Gesamtverbund synergetische Wirkungen entfalten. Im Bereich der Baumaschinensteuerung oder der Deformationsmessung zeigt sich deutlich, dass mit der Kombination von GPS-Sensoren/Neigungsmesssensoren oder Neigungsmesser/bildverarbeitende Sensoren entsprechende Synergien entstehen. Zunehmend wird bei den effizient arbeitenden Baumaschinen der Wunsch nach einem fehlertheoretisch basierten Genauigkeitsnachweis der durchgeführten Lagebestimmung geäussert, um bei allfällig auftretenden Messfehlern schwer wiegenden Haftungs- und Verantwortlichkeitsfälle bzw. Schäden frühzeitig zu verhindern.

Generell ist ein anzustrebender Genauigkeitsnachweis nur über die Schaffung von geeigneter Redundanzinformation zu erreichen, was konkret bedeutet, dass zusätzliche unabhängige Messinformationen in die Lagebestimmung eingeführt werden müssen.

Die aus der terrestrischen Vermessung bekannten Verfahren (vermittelnde bzw. bedingte Ausgleichung) sind, aufgrund der Komplexität der zugrundeliegenden stochastischen und mathematischen Modelle, für die Integration hybrider Messsensoren oftmals nur mit grossem Aufwand für Echtzeitanwendungen einsetzbar. Ebenso sind bei nur schwach überbestimmten Ausgleichungsaufgaben die Normalgleichungsmatrizen nur schwach konditioniert und daher schwierig zu beherrschen. Ebenso muss in der rauen Messpraxis oft mit Ausfällen von einzelnen Messsensorinformationen gerechnet werden, was eine individuell entsprechende Neufestsetzung des mathematischen Modells (A oder B-Matrix) erforderlich macht.

Aus der Patentschrift EP 1 079 029 A2 ist ein definitionsgemässes hybrides Verfahren und eine Vorrichtung zur dreidimensionalen Steuerung einer Baumaschine bekannt. Durch die Verwendung eines globalen Positionierungssignals eines GPS-Empfängers und eines Höhensignals wird ein System zur Bestimmung einer Position einer Baumaschine geschaffen, welches eine typische Höhengenauigkeit im Millimeterbereich aufweist, während die Genauigkeit bezüglich einer horizontalen Ebene im Zentimeterbereich liegt. Durch eine variable Drehachse eines Rotationslasers können digitale Geländemodelle abgearbeitet werden. Eine überbestimmte Lagebestimmung ist mit der beschriebenen Vorrichtung nicht möglich.

Im US-Patent US 7,139,651 B2 ist ein hybrides Messsystem mit einem 3D- und einem 2D-GPS-System und mit Neigungsmessern für die Bestimmung der Neigungen in den Hauptrichtungen des Objektes beschrieben. Das System kann alternativ auch mit Beschleunigungsmessem und mit einem Orientierungskreisel ausgerüstet werden. Obschon eine messtechnische Überbestimmung vorliegt, wird keine Verschmelzung der unterschiedlichen Messinformationen durchgeführt. Ein fehlertheoretisch begründetes Genauigkeitsmass der Lagebestimmung ist nicht offenbart.

Die fehlertheoretischen Grundlagen zur räumlichen Lagebestimmung von Netzen ist in der Publikation von Hellmut H. Schmid "Anfelderung eines Netzes unter der Bedingung $\Delta xTPx \ \Delta x = Minimum$", 1980 (Eidgenössische Technischen Hochschule Zürich, Institut für Geodäsie und Photogrammetrie "Vom freien zum gelagerten Netz"; Anhang I), zu finden. Darin werden die 3-dimensionalen Helmertbedingungen hergeleitet, ohne jedoch einen Bezug zu den der Maschinensteuerungsverfahren oder Monitoringanwendungen herzustellen.

## Darstellung der Erfindung

Es stellt sich daher die Aufgabe, Verfahren und Vorrichtungen zur Verfügung zu stellen, welche die Nachteile des Standes der Technik überwinden.

Diese Aufgabe wird durch das Verfahren und der Vorrichtung der unabhängigen Ansprüche gelöst. Bevorzugte Verfahrensausgestaltungen der Erfindung werden in den abhängigen Ansprüchen beschrieben.

Demgemäss betrifft ein erster Aspekt der Erfindung ein Verfahren zur Lagebestimmung von Objekten mittels eines hybriden, geodätischen Messsystem mit redundanten Messinformationen zu schaffen, welches gegenüber dem Stand der Technik eine Ausgleichung unter der Restriktion minimal verbleibender Restklaffungen erlaubt und vielseitig einsetzbar ist. Das Verfahren zur Lagebestimmung erlaubt zudem eine Gewichtung mit der spezifischen Messinformationsgenauigkeit der Sensoren oder eine individuell vorgenommene Gewichtung. Durch die Möglichkeit einer individuell vornehmbaren Gewichtung einzelner Messinformationen können einzelne oder gruppenweise Überblendungen von Messresultaten, wie sie beispielsweise bei einem sogenannten "leap-frog"- oder Sprungstandverfahren bei der tachymetrischen Erfassung von Baumaschinen notwendig sind, vorgenommen werden. Aus dem erfinderischen Verfahren ist ein fehlertheoretisch interpretierbares Genauigkeitsmass ableitbar, welches eine qualitative Beurteilung der vorgenommenen Lagebestimmung oder das Aufspüren von Messfehlern erlaubt. Im Gegensatz zu Prädiktionsverfahren (z.B Kalman-Bucy-Filter) weist das erfinderische Verfahren den Vorteil auf, dass die räumliche Struktur, welche durch die Passpunktkonfiguration idealisiert abgebildet wird, in der Lageberechnung bzw. Ausgleichung berücksichtigt wird. Das Verfahren zur Lagebestimmung eines Objektes oder einer Körperlichkeit mittels einer Ähnlichkeitstransformation, setzt korrespondierende Passpunkte in einem lokalen und einem übergeordneten Bezugssystem voraus. Die Lagebestimmung kann im Raum, in einer Ebene oder in einer ausgewählten Achsrichtung eines kartesischen Koordinatensystems durchgeführt werden.

Die zur Lagebestimmung benötigten Messinformationen werden von mindestens einem hybriden geodätischen Messsystem, welches aus mindestens zwei genauigkeits- oder aufgabenunterschiedlichen Messvorrichtungen aufgebaut ist, erfasst. Beispielsweise kann ein hybrides Messsystem aus zwei gleichartigen, aber unterschiedlich genauen, GPS-Systemen aufgebaut sein, wie sie in der bereits erwähnten Patentschrift US 7,139,651 B2 zu finden sind. Unter einer aufgabenunterschiedlichen Messvorrichtung kann beispielsweise eine Messvorrichtung zur Ermittlung einer Quer- oder Längsneigung, eine Distanzmesseinrichtung, ein Orientierungskreisel, ein tachymetrisches oder satellitengestütztes Messsystem verstanden werden. Des Weiteren können unter aufgabenunterschiedlichen Messvorrichtungen auch gleichartige Messsysteme verstanden werden, welche sich gegenseitig oder sequenziell in der Messaufgabe ablösen und dabei ein stetige Übergangsfunktion anwenden um abrupte Sprünge, bedingt durch die stets minimal vorhandenen Restklaffungen zwischen den Messsystemen, im Gesamtresultat zu vermeiden.

In einem nächsten Schritt werden die Messinformationen in das übergeordnete Passpunktsystem, vorzugsweise in der Form kartesischer Koordinaten, übergeführt und spezifische Messwertkorrekturen angebracht (Temperatur-, Geräte-, Projektions- oder Meteokorrekturen).

Die in Bezug auf die Dimension des Passpunktsystems dimensionsgleich vorliegende Messinformationen bilden definitionsgemäss sogenannte Vollpasspunkte. Bei einer 3D-Lagebestimmung können daher nur Ergebnisse aus Messsystemen die ein Koordinatentripel (wie z. B. GPS-Resultate oder tachymetrische Resultate) liefern, sogenannte Vollpasspunkte bilden.

Die in Bezug auf die Dimension des Passpunktsystems unterbestimmten Messinformationen bilden Teilpasspunkte, was bedeutet, dass beispielsweise Ergebnisse aus Messsystemen welche zwei Koordinatenwerte aufweisen und in einer 3D-Lagebestimmung eingeführt werden sollen, definitionsgemäss Teilpasspunkte genannt werden. In einer 2D-Lagebestimmung bildet ein solches Koordinatenpaar jedoch ein Vollpasspunkt. Die Komponenten, welche zu einer Unterbestimmung führen, werden mit genügend genauen Näherungswerten versehen.

Eine dritte Kategorie bilden die Relativpasspunkte. Definitionsgemäss bilden nicht auf ein geodätisches Datum bezogenen Messinformationen und nicht direkt mit einem übergeordneten Koordinatensystem in Bezug stehende Messinformationen, sogenannte Relativpasspunkte. Als Beispiel seien Neigungsmesswerte genannt. Obschon auf eine geophysikalische Referenzfläche bezogen, sind Neigungsmesswerte welche sich auf ein lokal referenziertes Koordinatensystem beziehen, grundsätzlich invariant auf die Messposition auf dem Objekt. Eine Neigungsmessung liefert grundsätzlich an unterschiedlich lokalisierten Messstandorten des Objektes den gleichen Messwert, somit sind Neigungsmesswerte unabhängig von einem geodätischen Datum. Lediglich der Bezug auf die Ausrichtung des Koordinatensystems des Objektes ist zu beachten.

Als nächster Schritt folgt die Festlegung der Einzelgewichte der für die Lagebestimmung in Betracht kommenden Messinformationen. Für die Vollpasspunkte werden die auf das übergeordnete Koordinatensystem bezogenen Varianz-Kovarianz-Werte des mittleren Fehlers des zugehörigen Messsystemes oder Messsensors, welche sich auf eine mittleren Gewichtseinheit beziehen, für die Gewichtung eingesetzt.

Bei den Teilpasspunkte werden die zugehörigen Komponenten der Varianz-Kovarianz-Gewichtsmatrix, welche bezüglich den korrespondierenden Vollpasspunktkomponenten einen Defekt aufweisen oder nicht bestimmbar sind, durch einen rechentechnischen Minimalwert nahe dem Nullwert oder mit einem die Lagebestimmung nicht verfälschenden Minimalwert versehen. Die bekannten Fehlerellipsen oder der Varianz-Kovarianz-Matrix des mittleren Fehlers eines Messresultates werden auf eine mittlere Gewichtseinheit bezogen. Generell gilt eine umgekehrte Proportionalität - aus einem grosser mittlerer Fehler ergibt sich ein kleines Einzelgewicht und umgekehrt.

Die Festlegung der Gewichte der Relativpasspunkte wird prinzipiell wie bei den Teilpasspunkten vorgenommen. Bei Neigungsmesswerten ist vorgängig eine Umformung aus der Polarform, mit den Winkel- bzw. Orientierungsgenauigkeiten bezüglich einer Einheits- oder einer frei wählbaren Vektorlänge, in die kartesische Form notwendig.

Die Ähnlichkeitstransformation, unter der Restriktion minimal verbleibender Restklaffungen zwischen den korrespondierenden Passpunkten, wird solange iterativ vorgenommen, bis sich die Werte der verbleibenden Restklaffungen nicht mehr signifikant ändern. In den nachfolgenden Ausführungen soll der Koordinatenrahmen bzw. das übergeordnete Passpunktsystem als fest betrachtet werden. Somit wird das auf das Objekt bezogene ortsfest bezogene Passpunktsystem auf diesen Rahmen translatorisch verschoben und gedreht, einschliesslich der Möglichkeit einer Massstabsanpassung. Das Verfahren in dem das übergeordnete Passpunktfeld an das lokale Passpunktfeld transformiert wird stellt lediglich einen äquivalentes Verfahren dar bzw. sind im mathematischen Sinne dual. In der vorliegenden Beschreibung wird, falls nicht explizit anders erwähnt, von einer Transformation des lokalen Passpunktfeldes in das übergeordnete Passpunktfeld ausgegangen.

Die efindungsgemässe Ähnlichkeitstransformation ist verfahrensmässig in zwei wesentliche Teilschritte unterteilt.

Als erster Schritt erfolgt die Berechnung eines gewichteten Schwerpunktes s aus den kartesischen Koordinaten der Voll- und Teilpasspunkte des lokalen Passpunktsystems und des gewichteten Schwerpunktes S aus den Koordinaten der Voll- und Teilpasspunkte. Zu beachten ist, dass die Relativpasspunkte nicht zur Berechnung des gewichteten Schwerpunktes s und S herangezogen werden. Zur Berechnung der gewichteten Schwerpunkte, beispielsweise bei dynamisch zu erfolgenden Lagebestimmungen, kann auch ein gewichtetes gleitendes Mittel verwendet werden.

Als weiterer Schritt d2) erfolgt die Drehung des lokalen Passpunktsystems um den Schwerpunkt s, welcher mit dem Schwerpunkt S durch eine rechentechnische Translation aufeinandergelegt wird. Alternativ kann das übergeordnete Passpunktsystem um dessen Schwerpunkt S, welcher mit Schwerpunkt s durch eine Translation aufeinandergelegt wird, unter der Restriktion minimal verbleibender Restklaffungen, gedreht werden. Die beiden Möglichkeiten sind äquivalent bzw. im mathematischen Sinne dual. Zur Berechnung der verbleibenden Restklaffungen werden sowohl die Voll-, Teilpasspunkte als auch die Relativpasspunkte herangezogen. Dabei ist zu beachten, dass die zu minimierenden Restklaffungen (v) mit den zugehörigen Einzelgewichten zu multiplizieren sind, was sich in der Matrizenschreibweise als $v^TPv$ ausdrücken lässt. Die rechentechnische Drehung des lokalen Passpunktsystemes bis zur Erfüllung von $v^TPv$ = min kann durch Unterstützung von Konvergenz beschleunigender Algorithmen (wie z. B. der Regula-falsi-Methode oder Runge-Kutta) erfolgen. Falls weitere Punkte, welche keine Passpunkte darstellen, vom lokalen in das übergeordnete System oder umgekehrt vom übergeordneten in das lokale System umgerechnet werden sollen, sind die Transformationsparameter der Ähnlichkeitstransformation zu bestimmen. Die Transformationsparameter lassen sich in einfacher Weise aus den Translationen aus dem ersten Teilschritt der Ähnlichkeitstransformation und den Rotationselementen bzw. -winkeln des zweiten Teilschrittes d2) bestimmen.

In einem bevorzugten Verfahren wird die Suche nach dem Minimum der Zielfunktion $v^TPv$ des Schrittes d2) mittels bereits erwähnten Verfahren der numerischen Mathematik erfolgen. Insbesondere eignet sich dieses Verfahren wenn bereits gute Näherungswerte bekannt sind, beispielsweise bei aus einer oder mehreren unmittelbar vorangegangener Lagebestimmungen.

In einem ebenfalls bevorzugten Verfahren wird die Minimumsbestimmung des Schrittes d2) durch eine dem Fachmann bekannte Abrissberechnung vorgenommen. Die Abrissberechnung wird im Falle einer dreidimensionalen Berechnung zunächst unabhängig in Lage- und Höhenberechnung aufgeteilt. Von den auf die jeweilig zugehörigen Schwerpunkte des Maschinenkoordinaten- und des übergeordneten Koordinatensystems werden die Winkel zu den entsprechenden Passpunkten (Voll-, Teil- und Relativpasspunkte) berechnet. Zu jedem Winkelstrahl wird der mittlere Fehler des zugehörigen Punktes in Querrichtung zum entsprechenden Punkt, beispielsweise aus der zur Fehlerellipse zugehörigen Fusspunktkurve, berechnet. Der mittlere Fehler dient zur Bestimmung der zum den individuellen Winkel zugehörigen Gewicht, welcher anschliessend in die bekannte geodätische Abrissberechnung überführt wird.

In einem besonders bevorzugten Verfahren werden die Restklaffungen nach der Methode der kleinsten Quadrate, unter Berücksichtigung der Gewichte, minimiert. Dazu wird der in H. H. Schmid, 1980, beschriebenen Formelapparat, welche die Helmertbedingungen in allgemeiner Form darstellt, benutzt.

$$\sum_{i=1}^{n}\left( P_{X^\circ X^\circ}\Delta_X + P_{X^\circ Y^\circ}\Delta_Y + P_{X^\circ Z^\circ}\Delta_Z \right)_i = 0$$

$$\sum_{i=1}^{n}\left( P_{Y^\circ X^\circ}\Delta_X + P_{Y^\circ Y^\circ}\Delta_Y + P_{Y^\circ Z^\circ}\Delta_Z \right)_i = 0$$

$$\sum_{i=1}^{n}\left( P_{Z^\circ X^\circ}\Delta_X + P_{Z^\circ Y^\circ}\Delta_Y + P_{Z^\circ Z^\circ}\Delta_Z \right)_i = 0$$

$$\sum_{i=1}^{n}\left[ \left(Y^\circ P_{Z^\circ X^\circ} - Z^\circ P_{Y^\circ X^\circ}\right)\Delta_X + \left(Y^\circ P_{Z^\circ X^\circ} - Z^\circ P_{Y^\circ X^\circ}\right)\Delta_Y + \left(Y^\circ P_{Z^\circ X^\circ} - Z^\circ P_{Y^\circ X^\circ}\right)\Delta_Z \right]_i = 0$$

$$\sum_{i=1}^{n}\left[ \left(Z^\circ P_{X^\circ X^\circ} - X^\circ P_{Z^\circ X^\circ}\right)\Delta_X + \left(Z^\circ P_{X^\circ Y^\circ} - X^\circ P_{Z^\circ Y^\circ}\right)\Delta_Y + \left(Z^\circ P_{X^\circ Z^\circ} - X^\circ P_{Z^\circ Z^\circ}\right)\Delta_Z \right]_i = 0$$

$$\sum_{i=1}^{n}\left[ \left(X^\circ P_{Y^\circ X^\circ} - Y^\circ P_{X^\circ X^\circ}\right)\Delta_X + \left(X^\circ P_{Y^\circ Y^\circ} - Y^\circ P_{X^\circ Y^\circ}\right)\Delta_Y + \left(X^\circ P_{Y^\circ Z^\circ} - Y^\circ P_{X^\circ Z^\circ}\right)\Delta_Z \right]_i = 0$$

Die Komponenten in der Gewichtmatrix stellen die, aufgrund Genauigkeitsvorgaben oder individueller Vorgaben, Gewichte

$$\mathbf{P}_{X_i^\circ} = \begin{vmatrix} P_{X_i^\circ X_i^\circ} & P_{X_i^\circ Y_i^\circ} & P_{X_i^\circ Z_i^\circ} \\ P_{X_i^\circ Y_i^\circ} & P_{Y_i^\circ Y_i^\circ} & P_{Y_i^\circ Z_i^\circ} \\ P_{X_i^\circ Z_i^\circ} & P_{Y_i^\circ Z_i^\circ} & P_{Z_i^\circ Z_i^\circ} \end{vmatrix}$$

der Stützpunkte

$$\mathbf{X}_i^\circ = \begin{vmatrix} X_i^\circ \\ Y_i^\circ \\ Z_i^\circ \end{vmatrix}$$

dar. Der Klaffungsvektor wird durch

$$\Delta_{x_i} = \begin{vmatrix} \Delta_{x_i} \\ \Delta_{y_i} \\ \Delta_{z_i} \end{vmatrix}$$

dargestellt.

Ein weiter bevorzugtes Verfahren stellt die Berechnung des Minimums durch das nachfolgende heuristische Verfahren dar. Eine Lösung ist gefunden, wenn $v^t p v$ zu einem Minimum wird. Dazu wird wie nachfolgend vorgegangen:

Ausgehend von einem Ausgangswert, der entweder von einem bereits vorgängig ermittelten Wert stammt oder durch eine aus einer Näherungsberechnung einer einfach bestimmten Ausgangslage erfolgt, wird ein Datensatz erzeugt welche einen Startwert definiert. Die Dimension des Datensatzes ist abhängig von der Dimension der geometrischen Aufgabenstellung und enthält im Fall einer 3-Berechnung die Werte $\Delta\alpha$, $\Delta\beta$, $\Delta\gamma$. Dem Startwert werden die Werte in der Weise $\alpha_i = \alpha_0 + \Delta\alpha$, $\beta_i = \beta_0 + \Delta\beta$, $\gamma_i = \gamma_0 + \Delta\gamma$ aufaddiert. Mit den so verbesserten Rotationswinkeln werden die Koordinaten der zu lagernden objektbezogenen Passpunkte bestimmt. Wenn der Fall eintritt, dass $(v^t p v)_{i-1} > (v^t p v)_i$ werden die aufaddierten differentiellen Änderungen beibehalten, da diese Lösung in der Richtung minimaler Residuen konvergiert. Im Fall von $(v^t p v)_{i-1} < (v^t p v)_i$ wird die Lösung verworfen. Dies wird so lange wiederholt, bis ein Abbruchkriterium erreicht und eine Lösung gefunden wurde. Ein Abbruchkriterium kann zum Beispiel die Grösse der differentiellen Änderung sein. Werden diese so klein, dass sie keinen Einfluss mehr auf die gesuchten Rotationswinkel haben, kann abgebrochen werden. Beim Datensatz, für die differentiellen Änderungen $\Delta\alpha$, $\Delta\beta$, $\Delta\gamma$, handelt es sich um beliebige Werte, die in einem beliebigen Bereich $b_s$ liegen. Sie werden durch einen Zufallszahlengenerator erzeugt. Wie aus den Experimenten aus der Literatur bekannt ist, ist es wichtig den Startbereich bs für $\Delta\alpha$, $\Delta\beta$, $\Delta\gamma$ richtig einzustellen. Der Zufallszahlengenerator wird so konfiguriert, dass er beliebige Zahlen zwischen 0 und 1 erzeugt. Von den so erhaltenen Zahlen werden 0.5 subtrahiert, so dass man Zufallszahlen zwischen -0.5 < = bs < = 0.5 erhält. Dabei ist zu berücksichtigen, dass die differentiellen Änderungen $\Delta\alpha$, $\Delta\beta$, $\Delta\gamma$ immer kleiner werden müssen, um die exakte Lösung zu finden. Das heisst der Bereich in dem gesucht wird, muss immer feiner werden. Erreichen kann man dies, in dem man alle erzeugten Werte $\Delta\alpha$, $A\beta$, $\Delta\gamma$ mit einem Faktor multipliziert. Dieser Faktor wird in der Literatur, (z. B Martin Noak, Verschiedene Verfahren zur Bestimmung der Parameter einer Helmerttransformation, Seminararbeit im Studiengang Vermessungswesen der Technischen Universität Berlin, Januar 2002) Temperatur T genannt und ständig verkleinert. Die Erfahrung aus der Literatur lehrt, T fortlaufend mit 0.999 zu multiplizieren. Ein Abbruch des Algorithmus kann erfolgen, wenn T so klein geworden ist, dass die differentiellen Änderungen keinen signifikanten Einfluss mehr auf das Ergebnis ausüben.

In einem alternativen Verfahren können die Klaffungsberechnungen nach der Methode des minimalisierten Betrages der Restklaffung bzw. durch eine L1-Norm Minimalisierung vorgenommen werden oder des minimalen Betrages der Restklaffungen (v).

Die Summe der Residuen kann als Genauigkeitsmass für die Güte der erzielten Lagerung bzw. Lagebestimmung verwendet werden. Wird eine Lagerung nach der Methode der kleinsten Quadrate vorgenommen, wird das Genauigkeitsmass aus der quadratisch gewichteten Summe der Restklaffungen oder in Matrizenschreibweise $(v^T P v)$ gebildet, entsprechend gilt bei einer Anwendung einer L1-Minimalisierung das Genauigkeitsmass der Summe des gewichteten Betrages der Restklaffungsvektoren (pv). Ein zweiter Aspekt der Erfindung betrifft eine Vorrichtung zur Durchführung des Verfahrens gemäss dem ersten Aspekt der Erfindung.

Die Vorrichtung umfasst Mittel zur Erfassung der ermittelten Messdaten über geeignete Eingangsschnittstellen. Die Eingangsschnittstellen ermöglichen die Übertragung der Sensormessinformationen zur einer datenprozessierenden Einheit, welche mit einer Eingabeparameterverwaltung und Rechenmittel (Software und Hardware) ausgestattet ist, welche nachfolgend Prozessleitsystem genannt wird. Mit den Rechenmitteln wird eine Lagebestimmung einer Körperlichkeit oder eines mit der Körperlichkeit in geometrisch definierte Weise in Verbindung stehendes Objekt gemäss dem erfinderischen Verfahren ermöglicht. Die Körperlichkeit ist mit geeigneten Passpunkten versehen und erlaubt aufgrund der Konfiguration, der Art (Voll-, Teil oder Relativpasspunkt) und Anzahl eine geometrisch überbestimmte Lagerung. Die ausgeglichene Lagerung oder Lagebestimmung wird unter der Restriktion minimaler, bevorzugt unter gewichtet minimaler, Restklaffungen, vorgenommen. Aus den minimal verbleibenden Restklaffungen kann ein Genauigkeitsmass bestimmt werden, welches ein Mass für die Güte der vorgenommenen Lagerung darstellt. Des Weiteren erlaubt die Vorrichtung die resultatsgemässe Ausgangsinformationen einer weiteren Instanz (beispielsweise einer Baumaschinensteuerung) zuzuführen. Die resultatsgemässen Ausgangsinformationen können wahlweise aus den Lagebestimmungsparametern, dem Genauigkeitsmass oder den Koordinaten von Punkten des Objektes, beispielsweise von Punkten die keine Passpunktkoordinaten darstellen, bestehen.

Je nach Lokalisation der Sensoren und der Lokalisation der Vorrichtung sind drahtlose oder drahtgebundene Übertragungsmittel einzusetzen. Neben unterschiedlichen Messprinzipien wird zwischen objektgebundenen Sensoren oder objektexternen Sensoren unterschieden. Unter objektgebundenen Sensoren sind Sensoren zu verstehen, die mit dem bewegten Objekt verbunden sind und auf die Bewegung des Objektes selbst reagieren bzw. aus Messungen zu externen Bezugspunkten ihre aktuelle Position ableiten. Derartige Sensoren sind z. B. zu einem Trägheitsmesssystem integrierte Beschleunigungsmesser und Kreisel, Funknavigationsverfahren, Global Positioning System (GPS /DGPS), im Objekt integrierte Wegmesssysteme oder digitale Kameras. Unter objektexternen Sensoren werden Sensoren verstanden, welche das Objekt von aussen erfassen. Als objektexterne Sensoren kommen in Betracht: Theodolit- bzw. Tachymetersysteme, digitale Nivelliere, Lasertracker, Still-Video-Kameras, Laserinterferrometer, elektronische Laserkollimatoren, optische und elektrische Verfahren der Drahtabtastung beim Aiignement, Scanner, Schlauchwaagsysteme, Triangulationssensoren, Wegaufnehmer (induktiv, kapazitiv usw.), Dehnungsmessstreifen oder Extensiometer.

Die Vorrichtung ist derart ausgestaltet, dass zeitlich oder messtechnisch unterschiedliche Messkonfigurationen verarbeitbar sind. Eine zeitlich unterschiedliche Messkonfiguration kann beispielsweise eine temporäre Zuschaltung einer Messgruppe, wie beispielsweise bei einer "leap-frog"-Konfiguration bestehen. Eine messtechnisch unterschiedlicher Messkonfiguration kann z. B. aus einem Kalibrationsverfahren bestehen, bei welchem die Baumaschine mittels unterschiedlichen Messpunkten mit einem quasi-statischen arbeitenden Messverfahren eingemessen wird um mit dem Ausgleichungsresultat die an der Baumaschine angebrachten Sensoren zu kalibrieren bzw. zu überprüfen. Durch die quasi-statische Arbeitsweise, bei welchem mehrere Messpunkte in einer Abfolge von einzelnen Messungen eingemessen werden, kann die Anzahl der benötigte Mess- bzw. Vermessungsgeräte minimiert werden. Eine vierfache Überbestimmung kann beispielsweise mittels einem hochgenauen Theodoliten vorgenommen werden.

Die erfindungsgemässe Vorrichtung kann zudem eine Anzeigeeinheit enthalten oder über eine Datenverbindung mit eine externen Einheit verbindbar sein, um das Genauigkeitsmass anzuzeigen oder um bei einer Überschreitung eines wählbaren Schwellwertes einen geeigneten Warnhinweis abzugeben oder die Weiterverwendung des Lagebestimmungsresultates zu verhindern. Die Vorrichtung enthält zudem Mittel mit welchen die individuellen Gewichte der Messungen einzeln oder gruppenweise eingegeben oder gemäss Vorgaben variiert werden können.

Das Lagebestimmungsobjekt kann aus verschiedenen Anwendungsbereichen stammen, beispielsweise aus einer aus dem Bauwesen bekannten Baumaschine (oder einem Roboter) mit einem assoziierten Werkzeugteil welches in eine Solllage zu bringen ist oder welches gemäss einer vorgegebenen Trajektorie zu führen ist. Die Vornahme der Lagebestimmung kann einmalig oder auch in kontinuierlicher Abfolge erfolgen. Weitere Anwendungsbereiche stellen deformierbare Bauwerke (oder Teile davon) oder Bereiche der Erdoberfläche, welche einmalig oder periodisch überwacht werden sollen, dar. Durch die Bereitstellung eines Genauigkeitsnachweises des Verfahrens können allfällig bestehende Risiken fehlertheoretisch fundiert beurteilt werden.

Die Möglichkeit der Gewichtung einzelner Messungen oder Messgruppen eröffnet neue anwendungstechnische Möglichkeiten. So können beispielsweise tachymetrische Messsysteme, welche aufgrund ihrer beschränkten Reichweite und des Vorrückens der Baumaschine von einem neuen, vorgelagerten Messsystem erfasst werden müssen, durch gegenläufige Gewichtung aus- bzw. eingeblendet werden. Damit lassen sich Diskontinuitäten, bedingt durch auftretende Datumsdifferenzen zwischen den Messsystemen, abschwächen oder kritische Risiken, bedingt durch systematische Messfehler oder Aufstellfehler, vorzeitig erkennen. Des Weiteren kann das Prinzip der Nachbarschaft in gemischten Messsystemen berücksichtigt werden, beispielsweise bei gemischten globalen Positioniersystemen (GPS etc.) und lokalen Messsystemen (Tachymetersystemen).

Eine erfindungsgemässe Vorrichtung kann aus einer kombinierten GPS-Messvorrichtung und einer tachymetrischen Totalstation bestehen. Die Varianz-Kovarianz-Elemente für die Gewichtsmatrix können aus einer a priori Schätzung abgeleitet werden oder aus einer Zeitreihenanalyse bzw. Netzausgleichung bestimmt werden. Ein efindungsgemäss einsetzbares Messsystem stellt auch eine Distanzmessvorrichtung (z. B. einem optischen, akustischen oder elektromagnetischen Distanzmesser) dar. Ein weiteres Messsystem, welches optional mit dem erfinderischen Verfahren verwendet werden kann, stellt ein nivellitisches arbeitendes Instrument dar. Im Falle einer durchgeführten 2- oder 3-dimensionalen Lagebestimmung werden die Messresultate als Teilpasspunkt eingeführt. Die Z-Komponente wird mit allfälligen Stationskorrekturen versehen und wird mit dem a priori Gewicht in das Lagebestimmungsverfahren eingeführt. Die X,Y-Komponenten erhalten genügend genaue Näherungskoordinaten in X / Y und ein rechentechnisch geeignetes Minimalgewicht.

Ein Neigungsmessresultat welches, mit dem Objekt in eindeutiger Beziehung steht, wird efindungsgemäss als Relativpasspunkt in die Lagebestimmung eingeführt. Ein weiteres Beispiel eines zu einem Relativpasspunkt führenden Messsensor ist besteht aus einem Kreisel- oder ein Kompasssystem. Die dabei anfallenden Resultate werden, im Gegensatz zu den Neigungswerten, in einer Horizontalebene in das Verfahren eingeführt. Falls der Offset, gebildet aus der Distanz zwischen Messposition und Schwerpunkt S bzw. s, einen zu grossen Einfluss auf die Lagebestimmung ist muss vorgängig eine Azimutkorrektur auf die Schwerpunktskoordinate S durchgeführt werden um eine Missweisung zu korrigieren.

Ein dritter Aspekt der Erfindung betrifft eine Maschinensteuerungseinrichtung bzw. ein Leitsysteme gemäss dem ersten und dem zweiten Aspekt, wobei dem Maschinenfahrer visuelle Informationen zur manuellen Führung der Maschine bzw. des Werkzeugs (z. B. die Baggerschaufel oder die Schar) bereitgestellt werden. Ebenfalls betrifft es sogenannt semi-automatische Systeme, bei denen die Maschinenposition graphisch zu den Designdaten dargestellt werden und die Höhensteuerung mit entsprechender Querneigung durch eine automatische Hydraulikregelung vorgenommen wird.

Ein vierter Aspekt betrifft die Verwendung des Verfahrens zur Optimierung von Steuerungssystemen. Dabei werden insbesondere durch Simulationsrechnungen die zum Einsatz gelangenden Sensoren mit ihren Genauigkeiten sowie die Messgeometrie auf ihren Einfluss auf die Gesamtgenauigkeit untersucht. Solche a priori Betrachtungen sind dem Fachmann grundsätzlich bekannt, durch das erfinderische Verfahren steht ihm in Zukunft ein besseres Modell zur Verfügung.

Drehbewegungen des Werkzeugteiles, welche aus regelungstechnischen Gründen, um den Schwerpunkt S oder s der Ähnlichkeitstransformation erfolgen sollen, können unter Anwendung des erfinderischen Verfahrens computergestützt optimiert werden und somit das regeltechnische Verhalten der Maschine optimiert werden.

## Kurze Beschreibung der Zeichnungen

Die zur Erläuterung von Ausführungsbeispielen der Erfindung verwendeten Zeichnungen zeigen in

Fig. 1 die der Ähnlichkeitstransformation zugrunde liegenden Helmertbedingungen 1 bis 6 für die 3-dimensionale Transformation bzw. Lagebestimmung;

Fig. 2 eine isometrische Darstellung eines Objektes welches eine flächengebundene mobile Baumaschine repräsentiert mit einem körperfesten Maschinenkoordinatensystem und einem übergeordneten Koordinatensystem;

Fig. 3 eine Darstellung in einer Vertikalebene mit einer, wie in Fig. 2 vereinfacht dargestellten Baumaschine mit den Messpositionen im Maschinenkoordinatensystem x,z ;

Fig. 4 die (mit den Maschinenkoordinaten korrespondierenden) Passpunkte oder Stützpunkte im übergeordneten Koordinatensystem, welche Vollpasspunkte, Teilpasspunkte und Relativpasspunkte bilden ebenfalls mit ihren Gewichtsanteilen in Matrizenschreibweise und den Fehlerellipsen im X (XY)/Z-Koordinatensystem;

Fig. 5 das Resultat nach einer, gemäss Verfahrensschritt d1), vollzogenen Berechnung für die beiden Schwerpunkte s und S aus den Voll- und Teilpasspunkten, welche einen gemeinsamen Ursprung für die translatorisch übereinandergelegten Koordinatensysteme bilden;

Fig. 6 eine Veranschaulichung einer vorzunehmender Umrechnung eines Relativpasspunktes aus einem gemessenen Neigungsmesswert ß, welcher aus der Polarform in eine kartesische Form umgerechnet wird um ein Stützwert bilden zu können und die veranschaulichte Winkelgenauigkeit des Neigungsmesswertes in der Form eines um den Neigungsmesswert liegenden Fächers;

Fig. 7 eine Veranschaulichung der vorzunehmenden Umrechnung aus der Winkelgenauigkeit in eine resultierende Fehlerellipse, welche mit einer Hauptachse in Richtung des Neigungswinkels ausgerichtet ist, mit allfällig erneuter Transformation in eine Fehlerellipse mit den Hauptachsen im X, Z System;

Fig. 8 eine Veranschaulichung der Situation nach einer erfolgter Vornahme des Verfahrensschrittes d2) durch Drehung des Maschinenkoordinatensystemes um den Schwerpunkt s=S unter der Restriktion minimal auftretender Restklaffungen;

Fig. 9 zeigt schematisch die, aufgrund individueller Messfehler auftretenden, Restklaffungen und die Residualvektordefinition;

Fig. 10 zeigt eine sogenannte Fusspunktkurve zu einer Fehlerellipse mit dem Hauptachsen a und b;

Fig. 11 zeigt Ablaufdiagramm mit den zugehörigen Schritten des erfinderischen Verfahrens in einer Übersichtsdarstellung;

Fig. 12     die Geometrie und die Fehlerellipsen eines Gleitschalungsfertigers in zwei verschiedenen Messkonfigurationen a) und b);

Fig. 13     der pw-Werte (y-Achse) des Rechenbeispieles aus Fig. 12 a) in Funktion des variierten Drehwinkels des Maschinenpasspunktsystems;

Fig. 14     zeigt eine Messsystem welches zur Durchführung des erfinderischen Verfahrens geeignet ist;

Fig. 15     zeigt eine vereinfachte Darstellung einer flächengebundenen Baumaschine mit einem idealisierten Werkzeugteil;

Fig. 16     zeigt ein Gleitschalungsfertiger wie er zum Herstellen von sogenannte Curband-Gutters" benutzt wird;

Fig. 17     zeigt den Gleitschalungsausleger von Figur 16 in einer Grundrissdarstellung;

Fig. 18     zeigt eine mobile Baumaschine, mit einem auf einem Plattform bewegbaren Werkzeugteil welche in Fahrtrichtung vorne angebracht ist;

Fig. 19     zeigt eine mobile Baumaschine mit einem auf einem Plattform bewegbaren Werkzeugteil welche in Fahrtrichtung hinten angebracht ist;

Fig. 20     zeigt eine Messdisposition mittels eines bildverarbeitenden Sensors;

Fig. 21     zeigt ein hochgenau in eine Aussparung oder Wanne zu bringenden Körper;

Fig. 22     zeigt eine Anwendung des Verfahrens im Monitoringbereich;

Fig. 23     zeigt eine Anwendung des Verfahrens im Monitoringbereich von Figur 22 in einer Vergrösserung;

Fig. 24     zeigt ein idealisiert Roboter zur Erstellung von Gebäudemauem mit den installierten Messsensoren;

Fig. 25     zeigt eine Monitoringanwendung bei welcher die zu überwachende Oberflächenschicht eine Fliessbewegung ausführt;

Fig. 26     zeigt eine erfindungsgemässe Vorrichtung zur Anzeige von Berechnungsresultaten sowie Manipulationsmöglichkeiten für die Gewichte der Messungen.

**Wege zur Ausführung der Erfindung**

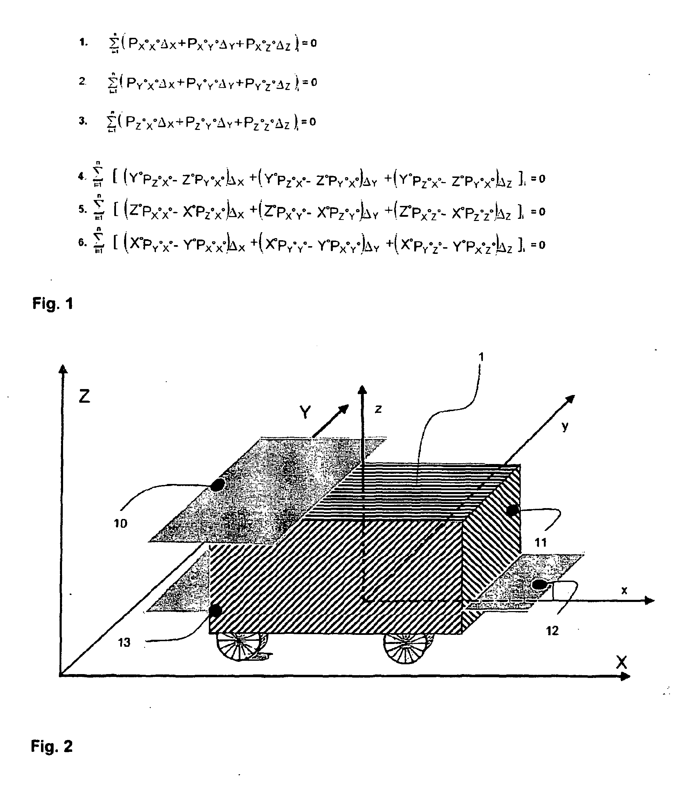

**Fig. 1** zeigt die Helmertbedingungen 1 bis 6 für die 3-dimensionale Transformation bzw. Lagebestimmung. Die Formeln 1 bis 3 beschreiben die Berechnung der gewichteten Schwerpunktsbedingungen. Die Formeln 4 bis 6 beschreiben die Restriktionsbedingungen welche erfüllt werden müssen, um minimal quadratische Restklaffungen zu erzielen. Die Formel dienen einzig der Bereitstellung der formelmässigen Grundlage zum erfinderischen Prinzip, das erfinderische Verfahren wird um die erfinderischen Verfahrensschritte modifiziert.

**Fig. 2** zeigt eine isometrische Darstellung eines Objektes (1), welches eine flächengebundene mobile Baumaschine repräsentiert, mit einem körperfesten Maschinenkoordinatensystem und einem übergeordneten Koordinatensystem. Die Koordinatensysteme müssen nicht notwendigerweise mit ihren Achsen parallel ausgerichtet sein. Vorzugsweise sollen die Hauptachsen im Wesentlichen orthogonal zueinanderstehen und den gleichen Drehsinn aufweisen. In der Figur wurde auf die Darstellung eines mit der Baumaschine assoziierten Werkzeuges verzichtet, da die Lage des Werkzeuges aufgrund des relativ vorhandenen, oder mit Sensoren zu ermittelnden, Bezuges zur Baumaschine hergeleitet werden kann. Die Fortbewegungsrichtung des Objektes erfolgt in Richtung der X-Koordinate des übergeordneten Koordinatensystems.

Auf der Oberseite des Objektes befindet sich beispielsweise ein GPS-Empfänger (10) (oder dessen GPS-Antenne) welcher X,Y,Z-Koordinaten ermittelt. Die genaue Lage des Empfangszentrums muss im x,y,z-Koordinatensystem bekannt sein. Auf der Maschinenvorderseite befindet sich die Messstelle (11) eines tachymetrischen arbeitenden Theodoliten. Die Theodolitstation ist in der Regel im übergeordneten Koordinatensystem bekannt und ist dort, zumindest temporär, ortsfest stationiert.

Sensor (12), mit einer Position an der Vorderseite des Objektes stellt einen Neigungsmesser dar welcher die Neigung in Richtung der x-Achse des Maschinenkoordinatensystemes bestimmt. Da der Messwert invariant zur Messstelle ist, lediglich eine Ausrichtung in Richtung der x-Achse ist notwendig ist, könte die Messstelle auch im Inneren des Objektes liegen. Dasselbe würde sinngemäss für einen Querneigungssensor in y-Richtung gelten.

An der Maschinenrückseite befindet sich eine Messstelle eines Höhensensors (13). Ein derartiger Sensor kann beispielsweise durch ein Digitalnivelliermessgerät, ein Ultraschallsensor oder ein Infrarotdistanzmesser welche die Höheposition aufgrund der gemessenen Distanz auf eine Referenzfläche bildet, ein Schlauchwaagensystem oder durch ein Rotationslasersystem gebildet werden.

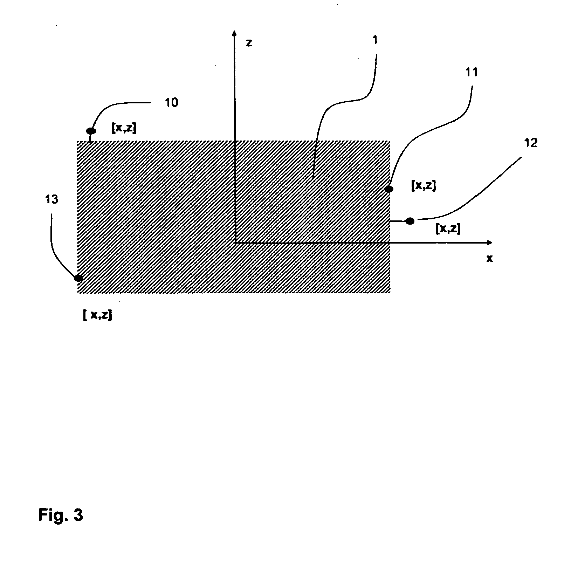

**Fig. 3** zeigt zur besseren Veranschaulichung des Verfahrensprinzips die Messanordnung in einer x,z-Vertikalebene, eine besonders vorteilhafte Messkonfiguration wird damit nicht beansprucht.

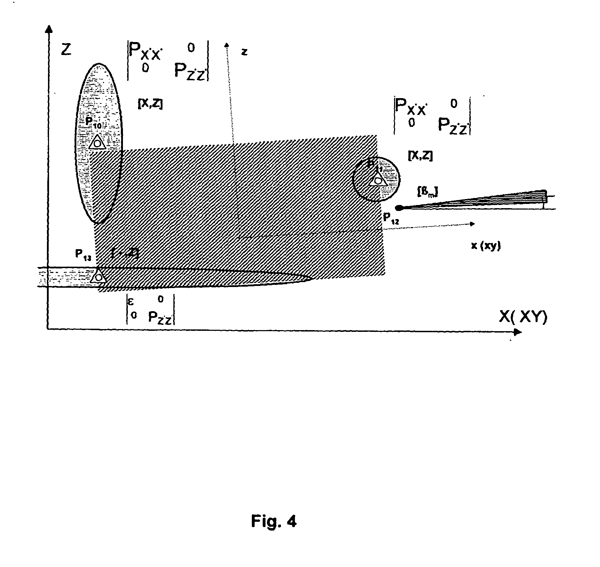

**Fig. 4** zeigt die Messstellen des Objektes (1), welches um einen Winkel ß gegenüber einer Horizontalen gedreht ist, im übergeordneten Koordinatensystem X,Z, welches eine Vertikalebene definiert. Die Messpunkte $P_{10}$, $P_{11}$, $P_{13}$ sind durch ihre Fehlerellipsen, welche die wahrscheinlichkeitstheoretische Lage der Messpunkte beschreiben, veranschaulicht. Im Falle von Messpunkt $P_{10}$ welcher eine GPS-Messpunkt darstellt, liegt eine klassische Fehlerellipse vor. Aufgrund der etwa 3-fach schlechteren Höhengenauigkeit, zeigt sich die Fehlerellipse des GPS-Empfängers entsprechend abgeplattet. Für das dargestellte Prinzip wurde angenommen, dass die Gewichte in X und Z Richtung unkorreliert sind, was zu einem Nullwert in den Diagonalelementen führt. Messpunkt $P_{11}$ zeigt hingegen einen spezielle Fehlerellipse in Form eines Kreises. Aufgrund eines Messsensors in Form eines Tachymeters mit identischer horizontaler und vertikaler Messgenauigkeit ergibt sich somit eine idealisierte Kreisform aus der Fehlerellipse. Aufgrund der separaten Höhen- und Horizontalwinkelmesseinrichtungen im Tachymeter kann von einer unkorrelierten Gewichtsmatrix ausgegangen werden. Messpunkt $P_{13}$ zeigt ein Höhenmessresultat welches in die Lagebestimmung eingehen soll. Da mit den erwähnten Messsensoren nur eine Z-Koordinate ermittelt werden kann und die X-Koordinate fehlt, liegt für die Berechnung in einer X,Z-Vertikalebene ein sogenannter Defekt vor. Es gehört zum erfinderischen Verfahren, die X-Koordinate mit einem genügend genauen Schätzwert anzunähern und das entsprechende Gewicht, welches in die Transformationsberechnung einfliesst, für die X-Richtung im Sinne einer rechentechnischen Behandlung als genügend kleiner Wert $\varepsilon$ einzufügen. Da sich die Gewichte aufgrund der umgekehrter Proportionalität zu den Hauptachsenausdehnungen berechnen, eine grosse Ausdehnung der Fehlerellipse in eine Achsrichtung führt zu einem geringen Gewicht, ergibt sich für ein entsprechend klein anzusetzendes Gewicht eine grosse Ausdehnung der Fehlerellipse, was im vorliegenden Fall von $P_{13}$ zu einer extremen Abplattung der Fehlerellipse führt. Zu $P_{12}$ ist keine Darstellung einer Fehlerellipse im übergeordneten System ableitbar, da im vorliegenden Falle die Messung in polarer Form vorliegt und sich nicht auf ein Datum oder Koordinatenrahmen abstützt. Das erfinderische Verfahren geht deshalb von einem um den Messwert $\beta_m$ liegenden Fächer, mit den wahrscheinlichkeitstheoretischen Grenzen analog derjenigen der Fehlerellipse, aus.

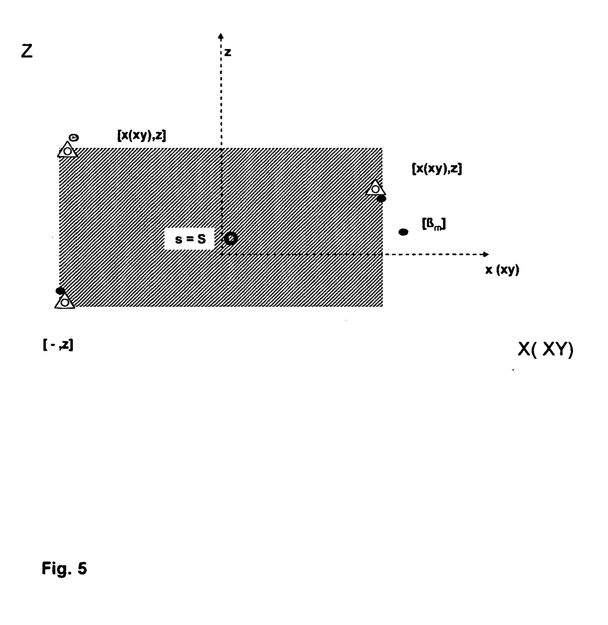

**Fig. 5** zeigt die Situation nach einer, gemäss Verfahrensschritt d1), vorgenommenen Berechnung der beiden Schwerpunkte s und S aus den Voll- und Teilpasspunkten. Temporär wird ein Hilfskoordinatensystem mit dem Ursprung s=S eingeführt (welches hier aus Gründen der Übersichtlichkeit nicht gezeigt ist). Gemäss dem erfinderischen Verfahren gehen nur die Voll- und Teilpasspunkte in die Schwerpunktsberechnungen ein. Dementsprechend sind nur die Punkte $P_{10}$, $P_{11}$, $P_{13}$ unter Einbezug ihrer individuellen Gewichtsanteilen an der Berechnung beteiligt.

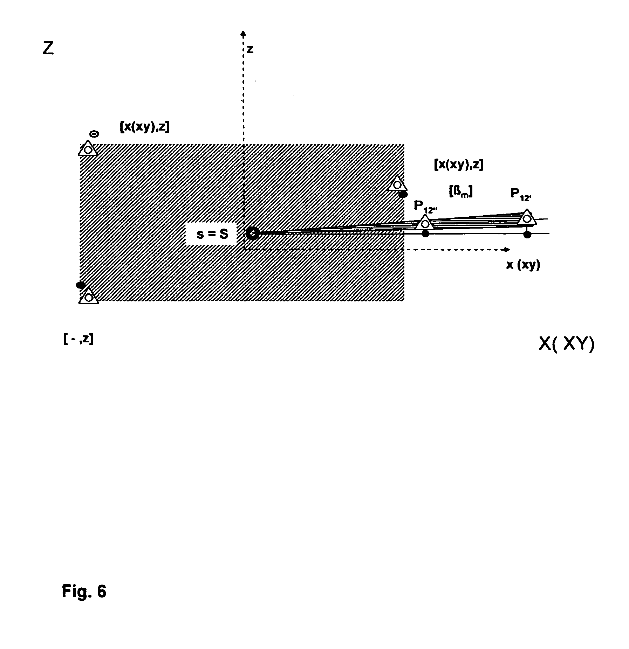

**Fig. 6** illustriert die vorzunehmende Umrechnung eines Neigungsmesswert ß, als Relativpasspunkt, in einen Stützwert für die anschliessende Rotation. Der Winkelmesswert wird zunächst mit dem Schnittpunkt der beiden anliegenden Schenkeln an den Schwerpunkt s=S angesetzt und der näher an der X-Achse liegende Winkelschenkel welcher parallel zu der X-Achsrichtung ausgerichtet. Auf dem gegenüberliegenden Schenkel, welcher mit der Ausgangsbasis den Winkel ß einschliesst, wird durch eine Einheitslänge oder einer frei bestimmten Länge ein Vektor in Polarform definiert. Mit dem Endpunkt des Vektors wird Punkt $P_{12}$ im temporären Koordinatensystem definiert, welcher anschliessend in eine kartesische Form umgewandelt wird. In Fig. 6 entspricht die Länge des Vektors, welcher Punkt $P_{12''}$ bildet, dem Punktabstand von $P_{12}$ zum Schwerpunkt s=S. Eine weitere Möglichkeit einer, zum Schwerpunktsabstand, unterschiedlicher Vektorlänge wird mit Punkt $P_{12''}$ gezeigt. Prinzipiell ist die Wahl der Vektorlänge frei, aus rechentechnischen Gründen soll eine zu kleine Vektorlänge, welche zu unerwünschten Rundungsdifferenzen führen kann, jedoch vermieden werden. Somit liegt nun ein für Teilschritt d2) verwendbarer Transformationspunkt oder Stützwert vor.

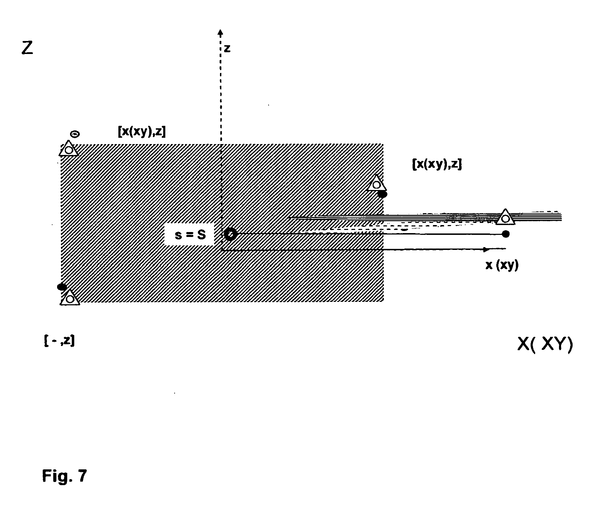

**Fig. 7** veranschaulicht die Berechnung der Fehlerellipse zu $P_{12}$, welche für die Gewichtsbestimmung benötigt wird. Die kürzere Achse der Fehlerellipse wird aus dem sich um $\beta_m$ erstreckenden Fächer berechnet. Die kürzere Hauptachse steht rechtwinklig zur Verbindung [s=S, $P_{12'}$]. Der Betrag der Hauptachse entspricht der halben Breite des Fächers an der Stelle $P_{12'}$. Die Grösse der Fehlerellipse der konjugierten Hauptachse als sehr gross angesetzt werden, was zu entsprechender minimaler Gewichtung im erfinderischen Verfahren führt. Bei grossen Winkeln $\beta_m$ ist eine allfällige Hauptachsentransformation der Fehlerellipse um $P_{12'}$ in Richtung X,Z notwendig.

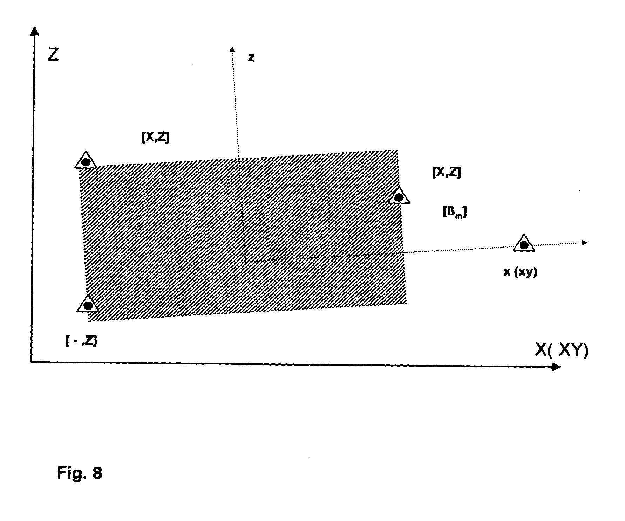

**Fig. 8** zeigt die Situation nach vorgenommener Ähnlichkeitstransformation der Passpunktfelder unter der Restriktion minimal verbleibender Restklaffungen. Dazu wird im vorliegenden Fall eine Drehung des Maschinenkoordinatensystem um den Schwerpunkt vorgenommen bis die Restklaffungen einen Minimalwert erreicht haben. Im Falle der Methode der kleinsten Quadrate sind die Helmertbedingungen 4 bis 6 rechentechnisch zu erfüllen. Dies kann rechentechnisch mit einer iterativ arbeitenden Näherungsverfahren gelöst werden.

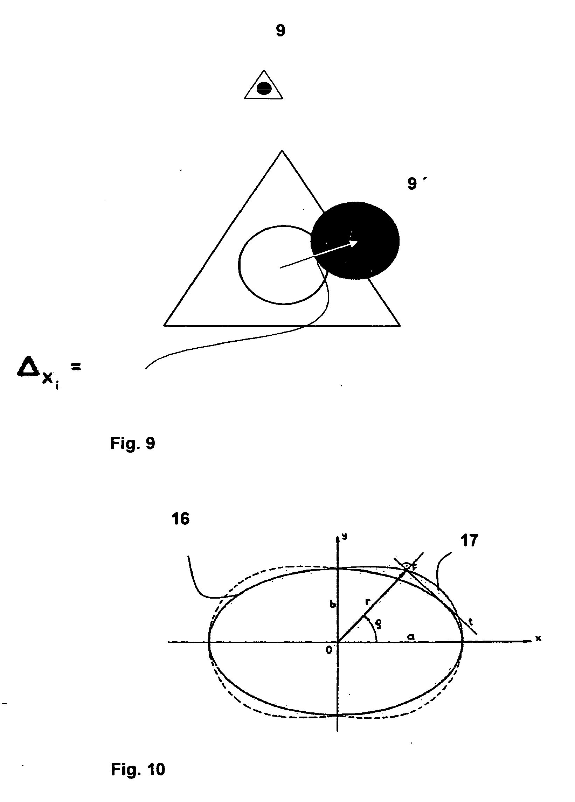

**Fig. 9** zeigt schematisch die, aufgrund individueller Messfehler auftretenden, Restklaffungen und die Definition des Residualvektors (9), in einer vergrösserten Darstellung als (9').

**Figur 10** zeigt eine sogenannte Fusspunktkurve (17) zu einer Fehlerellipse (16) mit den Hauptachsen a und b. Falls die Ausrichtungen der Fehlerellipsen in ihren Hauptachsen nicht orthogonal zum übergeordneten Koordinatensystem vorliegen, hat eine Umrechnung bezüglich den Hauptachsen des übergeordneten Systems zu erfolgen.

Der mittlere Fehler eines Punktes in Richtung $\varphi$, wenn der mittlere Fehler in Richtung der Hauptachse x (X) und y (Y) bekannt und voneinander unabhängig sind, berechnet sich aus der Fusspunktskurve gemäss

$$r^2 = a^2 \cos^2 \varphi + b^2 \sin^2 \varphi \ .$$

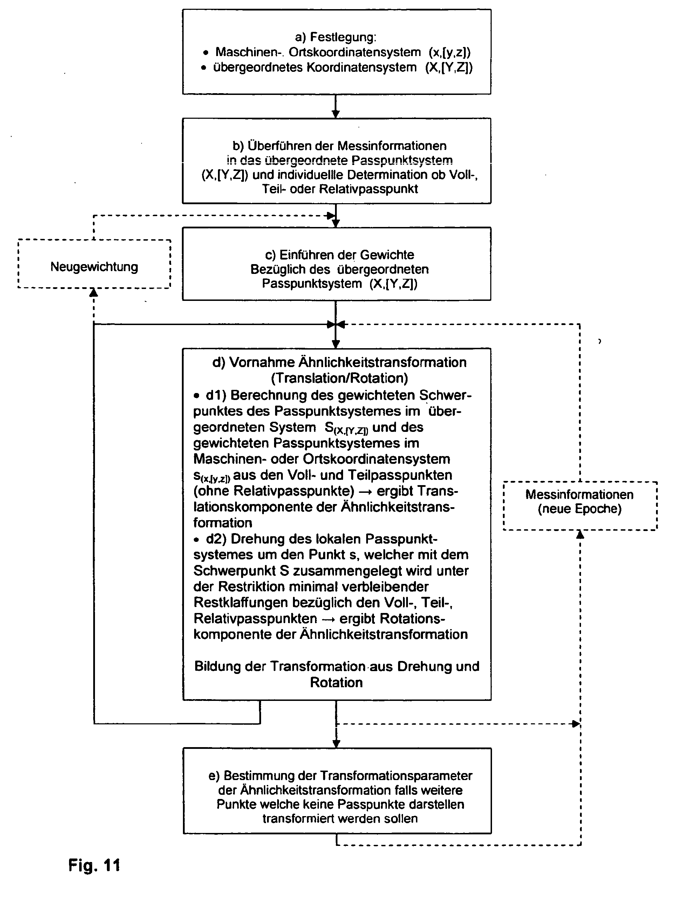

**Figur 11** zeigt das Ablaufdiagramm mit den zugehörigen Schritten des erfinderischen Verfahrens in einer Übersichtsdarstellung. Die Iterationsschlaufe welche die Konvergenz der Verfahrensschritte d) ermöglicht wurde bereits erwähnt. Für kontinuierliche Lagebestimmungen bzw. neue Messepochen können die einführenden Schritte a) - c) weggelassen werden (Rücksprungmöglichkeit: Messinformationen neue Epoche).

Sollte sich bei einem Rechendurchgang eine übermässige Abweichung des mittleren Fehlers an einer Gewichtseinheit a posteriori herausstellen, kann eine Neugewichtung vorgenommen werden. Dabei sind zunächst die Messungen mit den grössten Verbesserungen mit einem geringeren Gewicht zu versehen. Da die gewichtete Quadratsumme der Verbesserungen relativ anfällig auf grobe Fehler ist, kann mittels der erwähnten Rücksprungschlaufe das Verfahren im statistischen Sinne robuster gestaltet werden (Rücksprungmöglichkeit - Neugewichtung).

Nicht gezeigt wird in Fig. 11 eine Rücksprungsschlaufe bei ungenügend genauen Näherungskoordinaten. In diesem Fall kann eine erneute Iteration über die Verfahrensschritte c) - d) erforderlich werden.

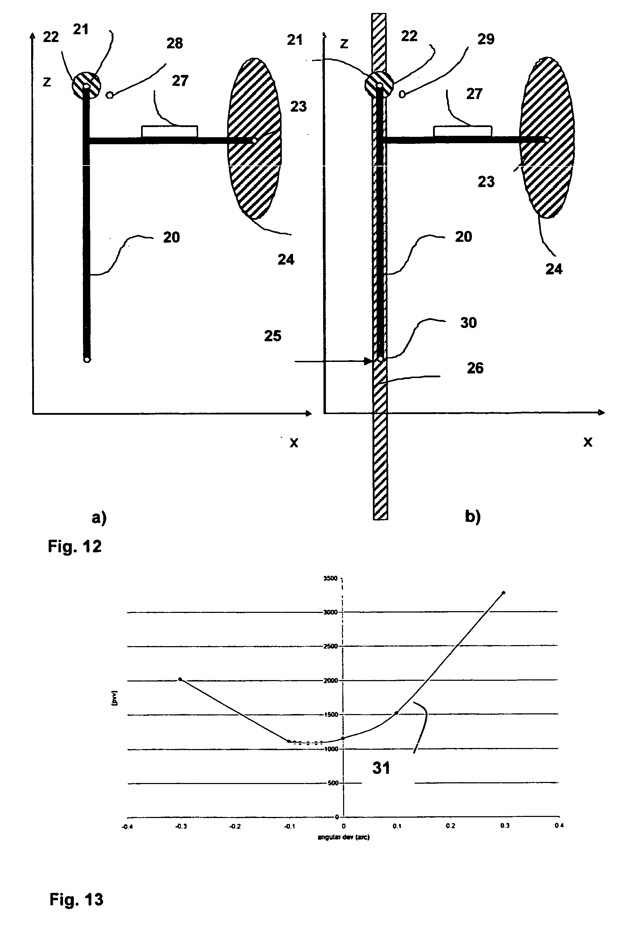

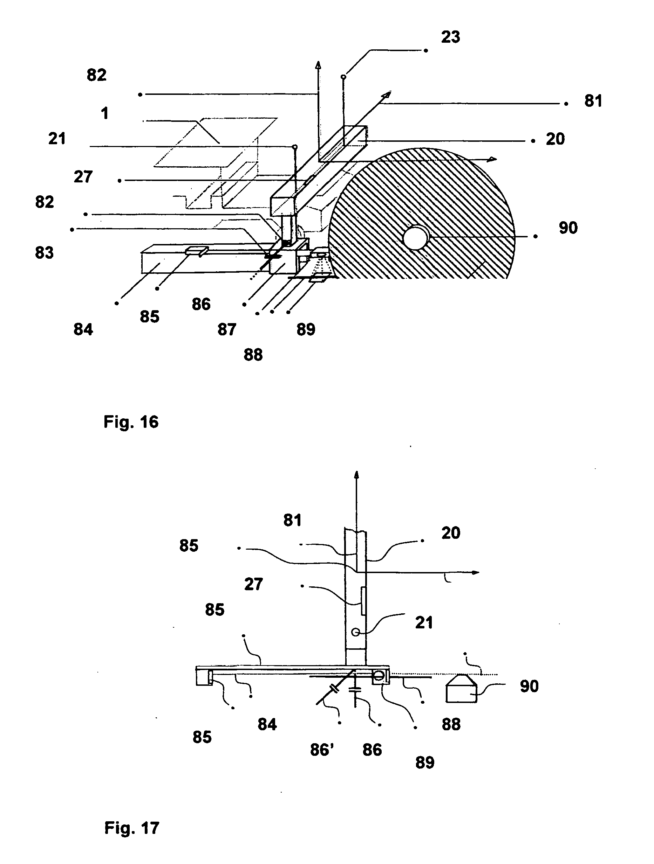

Die **Figuren 12 a)** und **b)** zeigen die geometrischen Verhältnisse und die Fehlerellipsen eines später in Figur 16 beschriebenen Gleitschalungsfertigers. Um eine möglichst hohe Flexibilität und Mobilität zu erreichen ist die Gleitschalung (mit der Koordinate gemäss (30)) über einen beweglichen Ausleger (20) an das Gefährt angebracht. Da die Gleitschalung aufgrund ihrer verdeckten Lage in der Regel einer direkten und einfachen Positionsbestimmung nicht zugänglich ist, muss die Lagebestimmung der Gleitschalung über eine Lagebestimmung des Auslegers (20) vorgenommen werden. Im vorliegenden Beispiel wurde vorerst angenommen, dass ein mit einer tachymetrisch basierter Messsensor die Koordinatenwerte $X_1$, $Z_1$, (21), eines GPS-Empfänger die Koordinatenwerte $X_2$, $Z_2$ (23) und mit einem Neigungsmesser (27) einen Quemeigungswert $\alpha$ ermittelt werden.

Gemäss Schritt a) des erfinderischen Verfahrens wird ein Maschinenkoordinatensystem (x,z) festgelegt. Im vorliegenden Fall wird das Verfahren in einer Vertikalebene ausgeführt um den Rechenablauf nicht unnötig zu komplizieren. Gemäss Schritt b) wurden die Messinformationen welche die notwendigen Messungen im übergeordneten Koordinatensystem (X,Z) darstellen, mangels echter Messwerte, numerisch simuliert.

|       | 1      | 2       |
|-------|--------|---------|
| X (i) | 0.7701 | -0.3791 |
| Z (i) | 0.1676 | -2.048  |

Die mit einem Zufallsgenerator erzeugten obigen normalverteilten Werte, wurden unter Berücksichtigung der typischen Sensorgenauigkeiten folgendermassen festgesetzt.

|       | 1         | 2         |
|-------|-----------|-----------|
| X (i) | 1001.00385 | 1003.99621 |
| Z (i) | 106.00084 | 104.93856 |

Wie aus der Geometrie der Figuren 12 ersichtlich ist, ergeben sich daraus folgende korrespondierende Passpunktkoodinaten:

|       | Tachymeter (1) [m] | GPS (2) [m] |
|-------|--------------------|-------------|
| x (i) | 1                  | 4           |
| z (i) | 6                  | 5           |

(fortgesetzt)

|  | Tachymeter (1) [m] | GPS (2) [m] |
|---|---|---|
| X (i) | 1001.00385 | 1003.99621 |
| Z (i) | 1106.00084 | 104.93856 |

Die korrespondierenden Passpunkte unterscheiden sich nur um eine Translation (1000, 100) und den Zufallskomponenten (Rauschen), die Verdrehung der beiden Koordinatensysteme beträgt 0. Die Messanordnung zeigt zudem, dass mit den beiden Messsensoren (Tachymeter (21), GPS (23)) Vollpasspunkte vorliegen und die Neigungsmessung (Messung aus 27) gemäss Erfindungsdefinition einen Relativpasspunkt darstellt. Wie der anschliessende Verfahrensschritt c) vorschreibt sind die Gewichte der Messungen bezüglich dem übergeordneten Messsystem festzulegen. Dabei ist von den sensortypischen a priori Genauigkeiten auszugehen. Unter Annahme eines mittleren Fehlers an der Gewichtseinheit von 0.01 m ergeben sich die zugehörigen Gewichte.

| Sensor | TPS | GPS | Neigungssensor |
|---|---|---|---|
| X | 0.005 [m] | 0.01 [m] |  |
| Y | 0.005 [m] | 0.01 [m] |  |
| Z | 0.005 [m] | 0.03 [m] |  |
|  |  |  | 0.1 Gon; entspricht einer Bogentänge von 0.0157 m bei r = 10m |
| Gewichte |  |  |  |
| X | 2 | 1 |  |
| Y | 2 | 1 |  |
| Z | 2 | 0.33333333 |  |
| Winkel |  |  | 0.636 |

Die Bestimmung der Translationskomponente der Ähnlichkeitstransformation erfolgt über die Berechnung des gewichteten Schwerpunktes des Passpunktsystemes im übergeordneten System $S_{(X,[Y,Z])}$ und des gewichteten Passpunktsystemes im Maschinen- oder Ortskoordinatensystem $S_{(x,[y,z])}$ (28, 29) aus den Voll- und Teilpasspunkten (ohne Relativpasspunkte).

|  | 1 | 2 |  |  |
|---|---|---|---|---|
| $x_i * px_i$ | 1 * 2 = 2 | 4 * 1 = 4 | $\Sigma x_i * px_i / \Sigma px_i$ | 6 / 3 = 2 |
| $z_i * pz_i$ | 6 * 2 = 12 | 5 * 0.333 = 1.6666 | $\Sigma z_i * pz_i / \Sigma pz_i$ | 13.6612.33= 5.857 |
| $X_i * pX_i$ | 2002.0077 | 1003.99621 | $\Sigma X_i * pX_i / \Sigma pX_i$ | 3006.0039 / 3 = 1002.0013 |
| $Z_i * pZ_i$ | 212.0017 | 34.9795 | $\Sigma Z_i * pZ_i / \Sigma pZ_i$ | 246.9812 / 2.333 = 105.8491 |

Die untenstehende Tabelle zeigt die Aufstellung der Koordinaten des auf die jeweiligen Schwerpunkte S, s bezogenen Koordinaten des Tachymeters, des GPS-Empfängers und des Neigungssensors.

|  | Tachymeter (1) [m] | GPS (2) [m] | Neigungssensor |
|---|---|---|---|
| x (i) | -1.00000 | 2.00000 | 10.0 |
| z (i) | 0.14286 | -0.85714 | 0 |
| X (i) | -0.99745 | 1.99491 | 10.00000 |
| Z (i) | 0.15175 | -0.91052 | -0.001264491 |

Eine Drehung des Maschinenkoordiantentripels wird iterativ durchgeführt bis die quadratische Summe der gewichteten Verbesserungen minimal wird.

Eine Drehung kann rechentechnisch einfach unter Zuhilfenahme einer Drehmatrix D erfolgen. Die neuen Koordinaten berechnen mittels der Matrizenmultiplikation D x. Für die Drehung im Raum kann eine Rotationsmatrix in folgender Form verwendet werden.

$$D = \begin{matrix} a_{11} & a_{12} & a_{13} \\ a_{21} & a_{22} & a_{23} \\ a_{31} & a_{32} & a_{33} \end{matrix}$$

Die Komponenten der Drehmatrix berechnen sich aus

$$a_{11} = \cos \eta * \sin \zeta$$

$$a_{12} = -\cos \eta * \sin \zeta$$

$$a_{13} = \sin \eta$$

$$a_{21} = \cos \xi * \sin \zeta + \sin \xi * \sin \eta * \cos \zeta$$

$$a_{21} = \cos \xi * \cos \zeta - \sin \xi * \sin \eta * \sin \zeta$$

$$a_{23} = -\sin \xi * \cos \eta$$

$$a_{31} = \sin \xi * \sin \zeta - \cos \xi * \sin \eta * \cos \zeta$$

$$a_{31} = \sin \xi * \cos \zeta + \cos \xi * \sin \eta * \sin \zeta$$

$$a_{33} = -\sin \xi * \cos \eta$$

Die Winkel $\xi, \zeta, \eta$ stellen die Drehwinkel um die Achsrichtungen dar. Die einzelnen Komponenten der Drehmatrix sind von der Reihenfolge der vorgenommenen Drehungen abhängig.

Die Summe der minimalen quadratischen Residuen kann in Matrizenschreibweise als

$$v^T P v = \sum_{i=1}^{n} v_i P_i v_i$$

dargestellt werden.

Der mittlere Fehler einer Gewichtseinheit (a posteriori) berechnet sich aus

$$m_0 = \sqrt{\frac{v^T P v}{n-u}}$$

wobei n die Anzahl Messungen bezeichnen und u die Anzahl der Unbekannten. Die Differenz n-u kann auch als Grad der Überbestimmtheit definiert werden, wobei jeweils die Überbestimmtheit bezüglich der geometrischen Problemstellung einzusetzen ist. Für verschiedene Fälle sind untenstehend die Resultate dargestellt.

Spalte **1** zeigt den Rotationswinkel der Drehung welche zum entsprechenden pw bzw. pv (Spalte 3) führt. Spalte **2** zeigt den entsprechenden Winkel im Bogenmass. Spalte **7** zeigt die berechneten pvv-Werte aus Fig. 12 a. In dieser Messdisposition wird keine Distanzmessung (25) auf die Gleitschalung (30) durchgeführt, der Grad der Überbestimmung beträgt 2. Wie gezeigt ist selbst bei dieser geringen Überbestimmung ein aussagekräftigem mittleren Fehler einer Gewichtseinheit a posteriori möglich. Spalte **3** enthält die pvv-Werte für die Situation wie in Figur 12 b) dargestellt, mit einer Distanzmessung (25) auf die Gleitschalung (30). Das Fehlermass gebildet durch die Verbesserung mal Gewicht ist in Spalte **4** dargestellt. Spalte **5** zeigt das Resultat einer Rechnung bei welchem die Messung des GPS-Empfängers in Z-Richtung mit einem niedrigen Gewicht versehen wurde. Spalte **6** das Resultat einer Berechnung bei welchem die GPS-Resultat mit einem fiktiv angenommenen Fehler beaufschlagt wurde, was durch den signifikant höher ausgefallenen mittleren Fehler a posteriori verdeutlicht wird.

| 1 | 2 | 3 | 4 | 5 | 6 | 7 |
|---|---|---|---|---|---|---|
| rot-ang (arc) | [gon] | 1 [pvv] | 1 [pv] | 1 red p | bug | ohne P 3 |
| 0.1 | 0.0015708 | 0.00183087 | 0.04426221 | | | |
| 0 | 0 | 0.00115546 | 0.00285605 | | | |
| -0.005 | -7.854E-05 | 0.00114259 | 0.00078574 | 0.00029419 | | |
| -0.0075 | -0.00011781 | 0.0011369 | -0.00024941 | 0.00029172 | | |
| -0.01 | -0.00015708 | 0.00113171 | -0.00128457 | 0.00028974 | 0.00799692 | |
| -0.025 | -0.0003927 | 0.00111101 | -0.0074955 | 0.00028819 | 0.00793601 | |
| -0.03 | -0.00047124 | 0.00110809 | -0.0095658 | 0.0002916 | 0.00791968 | |
| -0.0375 | -0.00058905 | 0.00110744 | -0.01267127 | 0.0003004 | 0.00789892 | |
| -0.04 | -0.00062832 | 0.00110822 | -0.01370642 | 0.00030432 | 0.00789299 | 0.00109367 |
| -0.05 | -0.0007854 | 0.0011163 | -0.01784704 | 0.0003249 | 0.00787426 | 0.00108779 |
| -0.1 | -0.0015708 | 0.00127614 | -0.03855011 | | 0.00789987 | 0.00110796 |
| m0 | | 0.00110809 | | 0.00028819 | 0.00789299 | 0.00108779 |

Die ausgeglichenen Koordinaten im übergeordneten oder im Zielkoordinatensystem berechnen sich aus der Formel

$$X_i = D\, x_i + X_s$$

**Figur 13** zeigt einen Kurvenverlauf der pw-Werte (31) bezüglich der y-Achse der zu lagernden objektgebundenen Koordinaten, in Funktion des Drehwinkels (x- Achse in arc). Im aufgeführten Beispiel sind die Resultate der zu Figur 12 a) berechneten Minimalfunktion zu finden.

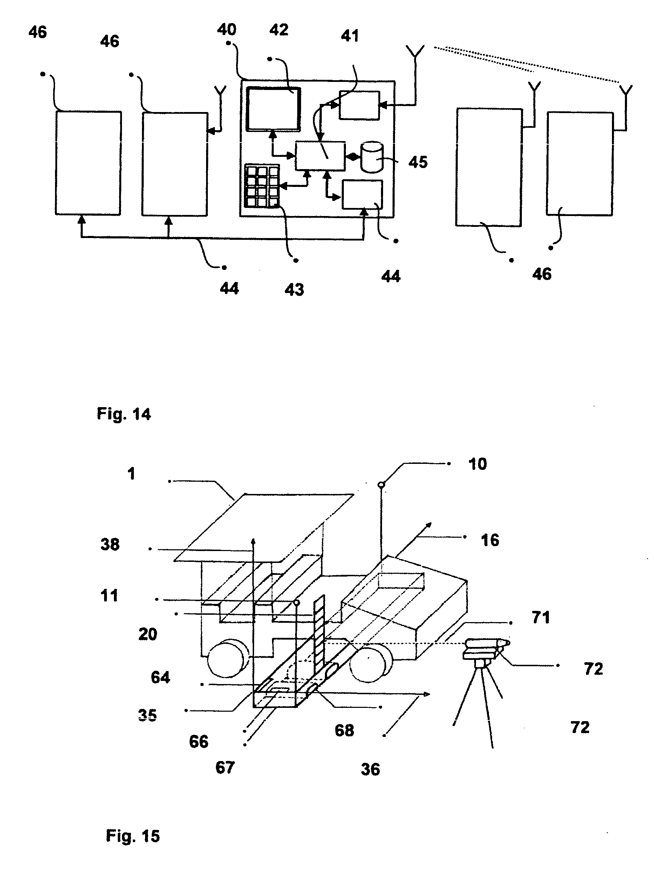

**Figur 14** zeigt eine Messsystem welches die Durchführung des erfinderischen Verfahrens ermöglicht. Kernpunkt bildet ein sogenanntes Prozessleitsystem (40), weiches mit den notwendigen Rechenmitteln ausgestattet ist um die notwendigen mathematischen Operationen durchzuführen. Das Prozessleitsystem besteht aus einer datenprozessierenden Einheit (41), Anzeigeelemente (42) mit Eingabemitteln (43), Kommunikationsinterfaces (44), Programm- und Datenspeichermittel (45) sowie mit dem Messsystem kommunizierenden Messsensoren (46) welche in eine geometrisch überbestimmte Lagebestimmung erlauben. Da meistens auf Baumaschine weitere datenprozessierenden Aufgaben bewältigt werden müssen (z. B. Steuerungsaufgaben der Hydraulikzylinder) kann dass Prozessleitsystem auf einem Baumaschinenrechner integriert werden. Für Monitoringaufgaben kann das Prozessleitsystem, welches z. B. auch geeignet ist Alarmmeldungen abzusetzen auch über ein Netzwerksystem (Internet, Intranet) verteilt sein.

**Figur 15** zeigt eine vereinfachte Darstellung einer flächengebundenen Baumaschine (1) mit einem idealisierten Werkzeugteil (67) welches in der Mitte unterhalb des Tragwerkes bewegbar angeordnet ist. Das Werkzeugteil kann aus eine Bohle oder eine Schalung zur Erzeugung von beispielsweise aus Beton hergestellten Schwellenkörper (68) bestehen. Für die Anwendung sei angenommen, dass eine räumliche Positionierung des Werkzeugteils erfolgen soll. Damit sind 6 Freiheitsgrade vorhanden. Für die illustrierte Anwendung sei vorausgesetzt, dass die Lagebestimmung durch zwei Messsensoren (10, 11) erfolgt welche Vollpasspunkte bilden und direkt mit dem Werkzeug (64) starr verbunden sind, die Quer und Längsneigungen werden mit Neigungssensoren (64, 66) oder mit einem kombinierten Längs- und Querneigungssensor ermittelt, welche gemäss erfindungsgemässer Definition sogenannte Relativpasspunkte bilden. Es sei zudem angenommen, dass die Sensoren permanent und synchron die Messresultate zur Lagebestimmung zuführen. Gemäss den erfinderischen Vorteilen kann mittels der vorhanden Überbestimmung eine Ausgleichung gemäss dem erfinderischen Verfahren erfolgen bzw. die Qualität der einzelnen Messwerte kann sensorspezifisch überprüft werden und allfällig mit einem geringeren Gewicht versehen werden. Mit einem zusätzlichen Sensor zur hochpräzisen Höhenbestimmung des Werkzeugkörpers ist zusätzlich eine weitere Genauigkeitssteigerung in der Höhenlage möglich. So ist beispielsweise eine Berücksichtung des sogenannten Prinzips der Nachbarschaft durch eine zusätzlichen Sensor, wie beispielsweise dem gezeigten Digitalnivelliergerät (72) mit einer Visurlinie (71), möglich. Zur Navigation der Baumaschine über einen Brückenübergang oder für ein Anschluss an ein bereits bestehendes Teilstück, bei welchen die Relativ- oder Nachbarschaftsgenauigkeiten ausschlaggebend sind, kann mit einem höher angesetzten Gewicht des Höhensensors allenfalls vorhandener Netzklaffungen zwischen dem GPS-System (z.B WGS 84) und dem lokalen System (beispielsweise ein Projektkoordinatensystem oder einem lokalen Koordinatensystem) Rücksicht genommen werden. Eine kontinuierliche, distanzabhängige Gewichtung ist ebenfalls möglich, d. h. je näher sich der Fertiger dem Brückenobjekt, mit gegenüber den WGS84-System bekannten und vorhandenen Datumsdifferenzen, nähert, je grösser soll die Gewichtung des lokalen Sensors. Durch die den jederzeit verfügbaren statistisch Genauigkeitsnachweis, ist jederzeit eine kontrollierte Anwendung ermöglicht.

Figur 16 zeigt ein Gleitschalungsfertiger wie er zum Herstellen von sogenannte Curband-Gutters (84) benutzt wird. Durch die an der Oberseite des Querträgers (20) angebrachten Messsensoren können sich durch die Fehlerfortpflanzung und dem Hebeleffekt, störende Abweichungen von der Projektachse ergeben. Unter Zuhilfenahme eines Rotationslasers (90), welcher eine Vertikalebene bildet; können mit einem auf der Gleitschalung (87) angebrachten Sensor (85) zur Detektierung des Lasersignals störende kurzperiodische und systematische Abweichungen "geglättet" werden. Eine weitere Möglichkeit zur Unterdrückung von störenden Abweichungen besteht im Einsatz eines Distanzmessers (86).

Figur 17 zeigt den Gleitschalungsausleger von Figur 16 in einer Grundrissdarstellung. Die Distanzmessung (86) zur Gleitschalung hat nicht notwendigerweise rechtwinklig zur Arbeitsrichtung der Gleitschalung zu erfolgen, eine Distanzmessung kann auch schräg zur Arbeitsrichtung (86') zu erfolgen. Aus Genauigkeitsgründen ist jedoch eine allzu grosse Abweichung vom rechten Winkel zu vermeiden. Einer weitere Alternative zur Berücksichtigung des Prinzips der Nachbarschaft entlang einer Projektachse stellt der gezeigte Einsatz eines Bildverarbeitungssensor (89) dar welcher eine auf der Fahrbahn angebrachte Längsmarkierung (88) erfasst und damit eine "Glättung" unerwünschter Abweichungen erlaubt.

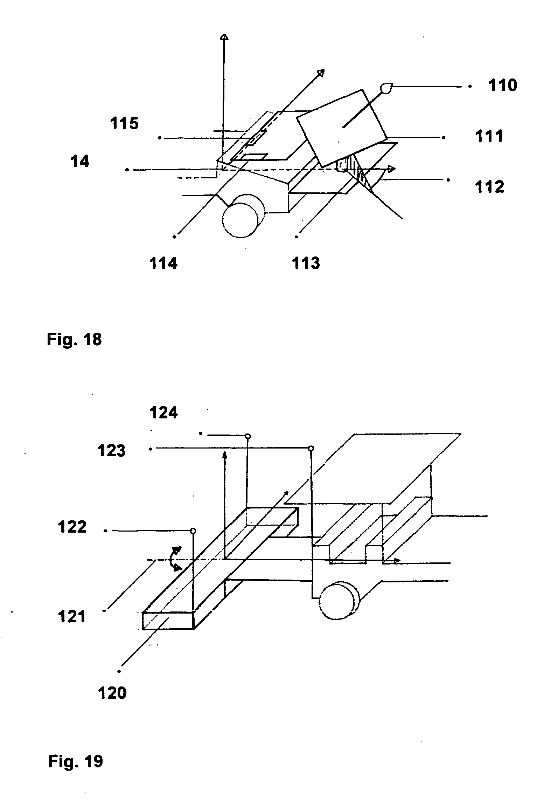

Figur 18 zeigt eine mobile Baumaschine mit einem auf einem Plattform bewegbaren Werkzeugteil (110), welches in Fahrtrichtung vorne angebracht ist. Das Werkzeug (110) kann aus einer Bohrlafette bestehen oder einer zu positionierenden Farbdüse. Die Messsensoren haben sich nicht notwendigerweise auf der mit dem Werkzeug in fester Verbindung stehenden Plattform (111) zu befinden. Ist der räumliche Bezug unter den objektbezogenen Passpunktkoordinaten bekannt, beispielsweise wie gezeigt durch den gemessenen Elevations- (113) und den Verschwenkungswinkel (112), kann eine Lagebestimmung auch auf diese indirekte Art erfolgen. Die Anwendung hat den Vorteil, dass die Messsensoren (GPS- Empfänger und Neigungssensoren 114, 115) auf stabilen Bereichen und empfangstechnisch vorteilhaften Zonen angebracht werden können.

Figur 19 zeigt eine selbstfahrende Baumaschine mit einem auf einem Plattform bewegbaren Werkzeugteil (120) welcher in Fahrtrichtung hinten angebracht ist. Das Werkzeug kann aus einer Bohle, beispielsweise zur Verarbeitung von Asphalt, bestehen. Analog zur Situation von Figur 18 ergeben sich die Vorteile dadurch, dass die Messsensoren nicht notwendigerweise mit dem Maschinenkoordinatensystem in fester Verbindung stehen müssen.

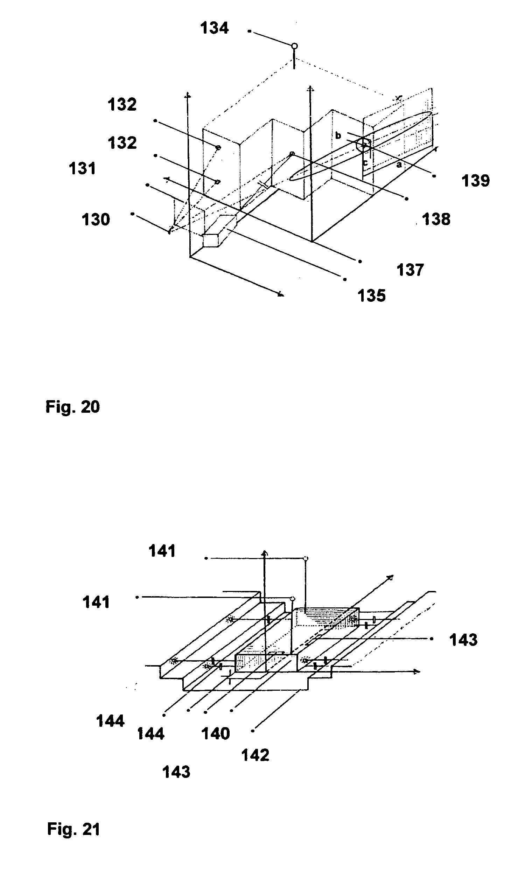

Figur 20 zeigt eine Messdisposition eines zu überwachenden Baukörpers mittels eines bildverarbeitend basierten Messsystems (130, 131). Auf der Oberseite des Baukörpers befindet sich ein geodätischer Sensor (134) der ein Koordinatentripel liefert (GPS oder Tachymeter). Ausgehend vom Projektionszentrum des Messsystems (130), welches im übergeordneten Koordinatensystem bekannt ist, werden die am Baukörper angebrachten Signaltafeln (132, 139, 138) mittels projektiver Abbildung auf der Empfangsebene (CCD-Kamera etc.) (132) abgebildet. Wie in der Figur gezeigt, kann die messtechnische Behandlung der erfassten Punkte (132, 139, 138) als Teilpasspunkt erfolgen. Die Hauptachse a des Fehlerellipsoides ist aus Anschaulichkeitsgründen verkürzt dargestellt, für die rechnerische Behandlung müsste jedoch ein hoher Wert angesetzt werden. Die restlichen Hauptachsenwerte b, c sind gemäss den erwarteten Genauigkeiten am Messpunkt festzulegen.

Figur 21 zeigt einen hochgenau in eine Aussparung oder Wanne (142) zu bringenden Körper (140). Auf dem Körper befinden sich Messsensoren (141) mit Messresultaten die vorwiegend in einem globalen Koordinatensystem anfallen. In einer solchen Messanordnung wird verlangt, dass die Positionierung dieses Körpers bezüglich optimaler nachbarschaftlichen Bedingungen oder in anderen Worten bezüglich optimaler relativer Genauigkeiten erfolgen muss. Die Messwerte werden beispielsweise von einem oder mehreren GPS-Empfängern (141), mehreren Neigungsmessern (143) und mehreren am peripheren Rand angebrachten Distanzmessem (144) (oder einem Laserscanner welcher flächenhaft den Körper vermisst) ermittelt. Für die Positionierung des Körpers kann, abhängig von der Nähe zur Einbaulage, die Gewichtung der Relativmessungen vergrössert werden.

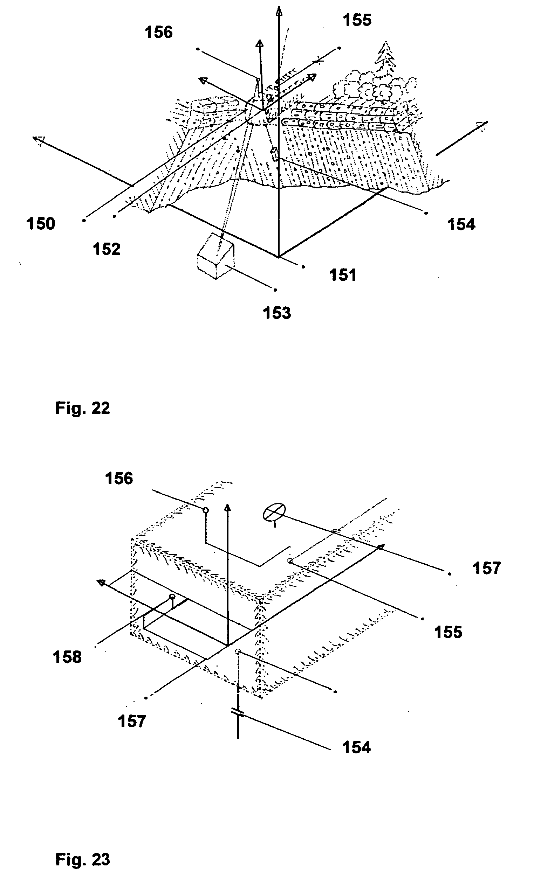

**Figur 22** zeigt eine Anwendung des Verfahrens im Monitoringbereich beispielsweise zur Erfassung von Deformationen an einer beweglichen Gesteinsmasse (150) von welcher eine Gefährdung ausgeht. Von einer Messstation (153) werden zahlreiche Punkte z. B. (156) periodisch erfasst. Diese Messinformationen liegen in einem übergeordneten Koordinatensystem (151) vor (Landeskoordinatensystem, Projektkoordinatensystem). Im Innem der Gesteinsmasse ist, ein in einer Bohrung aufgenommener, Neigungsmesser (155) angebracht welche als Relativpasspunkt in die Berechnung einfliesst. Distanzmessungen (154) von nahegelegenen Fixpunkten bilden sogenannte Teilpasspunkte.

**Figur 23** zeigt dieselbe Anwendung wie in Figur 22 gezeigt, als Vergrösserung. Auf der Oberseite ist ein Signal errichtet worden welches eine Erfassung durch einen Fernerkundungssatelliten (157) erlaubt. Unregelmässig anfallenden Messinformationen, bedingt durch unterschiedliche Transitdurchgänge, lassen sich ohne grosse Probleme mit dem Lagebestimmungsverfahren bewältigen, da jeweils keine neuen Ausgleichungsmatrizen gebildet werden müssen. Mit dem Verfahren können auch spezifisch geotechnische Instrumente, wie Extensiometer, Schlauchwaagsysteme usw., integriert werden (158).

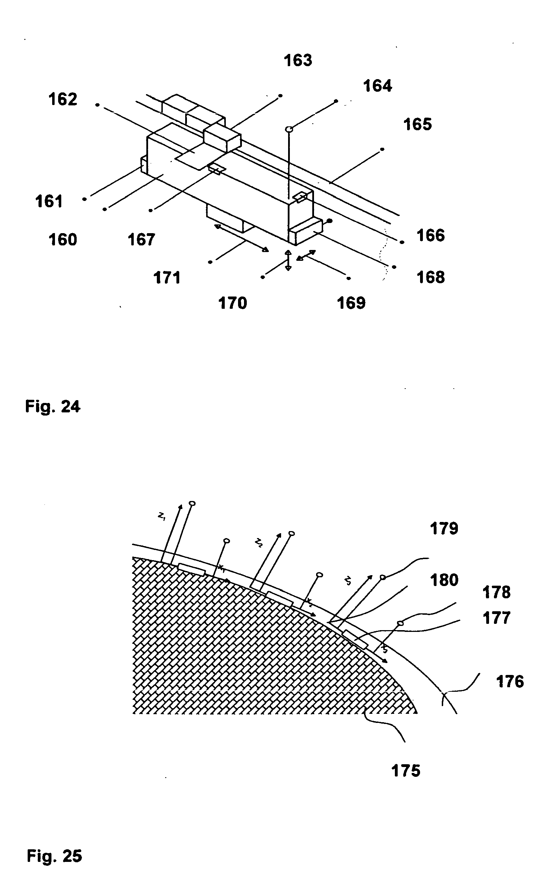

**Figur 24** zeigt einen idealisiert dargestellten Mauerroboter zur Erstellung von Gebäudemauem (160) mit Freiheitsgraden in allen 3-Dimensionen mittels Positionierungsmöglichkeiten (169, 170, 171), mit angebrachten Messsensoren (164, 166, 167,168) und einem Roboterarm (162) zur Mauersteinpositionierung. Durch einen GPS-Sensor (164) wird die Position des Roboters in einem übergeordneten Koordinatensystem ermittelt, die Distanz- (168) und die Neigungsmesser (166, 167) werden so angebracht, dass die Relativgenauigkeiten zwischen aktueller Lage und bereits erstelltem Mauerabschnitt den hohen Anforderungen entsprechen.

**Bild 25** zeigt eine Monitoringanwendung bei welche die zu überwachende Oberflächenschicht (176) eine Fliessbewegung über einer Gleitschicht (175) ausführt und mehrere, in die Oberflächenschicht eingebrachten, Koordinatensysteme (180) aufweist. Den einzelnen Koordinatensystemen sind Messpunkte zugeordnet welche Voll- oder Teilpasspunkte darstellen, beispielsweise durch einen Neigungsmesser (177) und GPS-Sensoren (178,179).

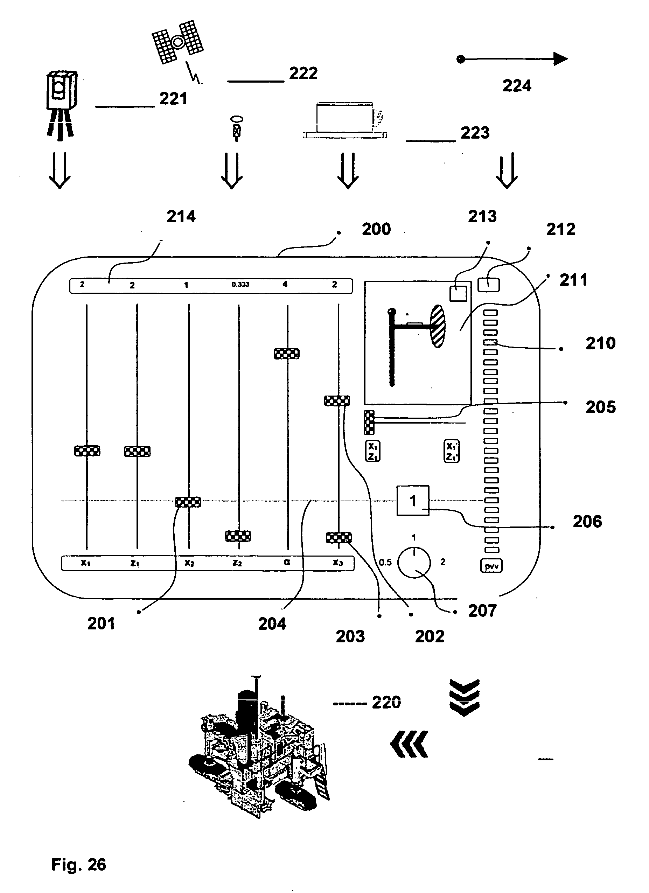

**Figur 26** zeigt eine erfindungsgemässe Vorrichtung mit einer Display- und Manipulationskonsole zum Prozessleitsystem (200). Die Darstellung als physische Kontrolleinheit dient einzig der Veranschulichung der erfinderischen Vorrichtung, eine entsprechend funktionale Ausgestaltung kann prinzipiell auch auf einer softwarbasierten Lösung erfolgen welche im Prozessleitsystem integriert ist. Der Anwendung liegt die Anwendung eines kleinen Gleitschalungsfertigers aus Figur 16 zugrunde. Mittels eines Drehknopfes (207) kann der mittlere Fehler einer Gewichtseinheit eingestellt werden. Eine Darstellung des eingestellten Wertes kann auf einem Displaybereich (206) angezeigt werden. Das aus der überbestimmten Messungen berechnete Genauigkeitsmass a posteriori (z. B. pvv oder $v^tpv$) wird auf einer Skala (210) oder numerisch angezeigt. In der vorliegenden Figur ist eine lineare Anzeige dargestellt was dem Maschinenverantwortlichen eine einfache optische Beurteilung ermöglicht. Je nach Grad der Überbestimmtheit der Messdisposition (Anzeige in 213) muss ein Grenzwert von etwa dem 2 bis 3-fachen des mittleren Fehlers a priori angesetzt werden um eine Fehlerschranke zu definieren. Ein Überschreiten der Fehlerschranke kann dazu verwendet werden um Alarmmeldungen abzusetzen oder anzuzeigen (212) oder um vor einer weiteren Verwendung der Baumaschine unter den gegebenen Messverhältnissen zu warnen.

Mit den idealisierten Schiebereglem (201) können die Gewichte der einzelnen Messungen in den Achsen x und z individuell verändert werden. Es ist möglich, hier jedoch nicht gezeigt, durch eine Koppelung der Schiebereglern untereinander eine gruppenweise Gewichtsveränderung herbeizuführen.

### Bezugszeichenliste

| | |
|---|---|
| 1 | mobile Baumaschine |
| 9 | Symbolische Darstellung der Kongruenz zwischen Koordinaten der zu lagernden objektbezogenen Passpunkten und den Passpunkten im übergeordneten System, 9' vergrösserte Darstellung, |
| 10 | GPS-Empfangsantenne bzw. Empfangsstelle (Vollpasspunkt) |
| 11 | 360° Reflektor eines Theodoliten bzw. zielverfolgenden Tachymeters |
| 12 | Längsneigungsmesser (Relativpasspunkt) |
| 13 | Höhensensor (Teilpasspunkt) |
| 16 | Fehlerellipse |
| 17 | Fusspunktkurve |
| 21 | Koordinatenwert durch Tachymeter ermittelt (Punkt 1) |
| 22 | Fehlerellipse des Tachymetermesswertes (Punkt 1) |
| 23 | Koordinatenwert durch Tachymeter ermittelt (Punkt 2) |
| 24 | Fehlerellipse des Tachymetermesswertes (Punkt 2) |
| 25 | auf Punkt 4 (Gleitschalung) gemessene Distanz |

## EP 2 208 019 B1

(fortgesetzt)

| | |
|---|---|
| 26 | Fehlerellipse der Distanzmessung |
| 27 | Neigungsmessgerät auf Ausleger |
| 28 | Schwerpunkt s der Messkonfiguration |
| 29 | Schwerpunkt s der Messkonfiguration (mit Distanzmessung auf Punkt 4) |
| 30 | Position der Gleitschalung |
| 31 | pvv- Minimumsfunktion |
| 35 | Nullpunkt des lokalen Koordinatensystems |
| 36 | x-Achse des Maschinenkoordinatensystemes (x/y/z) |
| 37 | y-Achse des Maschinenkoordinatensystemes (x/y/z) |
| 38 | z-Achse des Maschinenkoordinatensystemes (x/y/z) |
| 64 | Quemeigungmesser |
| 66 | Längsneigungsmesser |
| 67 | Bohlenkörper ev. auch Schar |
| 68 | Ausnehmung in der Bohle für Schwellenproduktion |
| 71 | Visur des Digitalnivelliers mit bek. Horizont im übergeordneten System |
| 72 | Digitalnivellier mit automatischer Ablesemöglichkeit |
| 73 | Digitalnivellierlatte |
| 84 | durch Gleitschalung erstellte Trennwand-Barriere aus Beton |
| 85 | Optischer Sensor zur Lageerkennung |
| 85 | Optischer Sensor zur Erkennung der Vertikalebene des Rotationslasers (in Fahrtrichtung hinten) |
| 87 | Gleitschalung zur Erstellung von "Curbs and Gutters" |
| 88 | sichtbar angebrachte Absteckachse auf festem Untergrund |
| 89 | Sichtbereichbereich eines optischen Sensors |
| 90 | Rotationslaser welcher Vertikalebene parallel zur Trennwand-Barriere Soll-Achse definiert |
| 110 | Assoziiertes Werkzeug z. B. Bohrlafette, Farbdüse etc. |
| 110 | Werkzeug z. B. Bohrlafette |
| 111 | Trägerplatte mit assoziiertem Werkzeug auf der Fahrzeugvorderseite, nicht Ortsfest am Fahrzeug verbunden |
| 111 | Trägerteil für Bohrlafette mit 2 Freiheitsgraden |
| 112 | bez. Machinenkoordinatensystem bekannter Deklinationswinkel bez. x-Achse |
| 112 | Verschwenkungswinkel |
| 113 | bez. Machinenkoordinatensystem bekannter Inklinationswinkel bez. x,y-Ebene |
| 113 | Elevationswinkel |
| 114 | Längsneigungsmesser (Relativpasspunkt) |
| 115 | Gluerneigungsmesser (Relativpasspunkt) |
| 120 | assoziiertes Werkzeug auf der Fahrzeugrückseite (Bohle oder Gleitschalung), nicht Ortsfest am Fahrzeug verbunden, um die Längsachse am Fahrzeugchassis drehbar. |
| 121 | Längsachse am Fahrzeugchassis an welcher die Bohle drehbar befestigt ist |
| 122 | an der Bohle angebrachter 3D-Sensor (GPS oder360°Prisma) |
| 123 | am Fahrzeugchassis angebrachter 3D-Sensor (GPS, 360°Prisma) |
| 124 | an der Bohle angebrachter 3D-Sensor (GPS oder360°Prisma) |
| 130 | Projektionszentrum des optisches Messsystems |
| 131 | Bildebene des optisches Messsystem zur Überwachung des Baukörpers |
| 132 | Signal an Baukörper mit zu erwartenden Deformationen, Bewegungen bez. übergeordnetem Koordinatensystem X,Y,Z |
| 132 | Teilpasspunkte in Visurrichtung des optischen Messsystems , 66,67 |
| 135 | Distanzmessgerät |
| 137 | Nullpunkt des übergeordneten Koordinatensystems X,Y,Z |
| 138 | Passpunkt mit Distanzmessung und Messung vom optischen Messsystem |
| 139 | Teilpasspunkte des Messsystems mit Fehlerellipsoid mit den Achsen a,b,c in der Visurrichtung des optischen Messystemes |

(fortgesetzt)

| | |
|---|---|
| 140 | Konstruktionselement zur Einbringung in Wanne |
| 141 | GPS-Sensor |
| 150 | Rutschgebiet, Gesteinsmasse |
| 151 | Nullpunkt des übergeordneten Koordinatensystems |
| 153 | Messstation mit Tachymeter zur erfassung von Oberlächenpunkten |
| 154 | Distanzmessungen von nahegelegenem Fixpunkt |
| 155 | Neigungsmesser im Inneren der Gesteinsmasse |
| 156 | Oberflächenmesspunkt (GPS-Sensor, Tachymeterreflektor) |
| 157 | Signal zur Erfassung durch Fernerkundungssatellit |
| 158 | Messstelle für geotechnische Instrumentationen (Extensiometer, Schlauchwage, etc.) |
| 160 | Roboter zur Erstellung Mauern |
| 161 | Distanzmesser zu bereits erstelltem Mauerwerk |
| 162 | Manipulator zur Mauersteinpositionierung |
| 163 | Mauerstein |
| 164 | Messsensor z. B. GPS-Sensor |
| 165 | Bereits erstelltes Mauerwerk |
| 166 | Quemeigungsmesser auf Roboter |
| 167 | Längsneigungsmesser auf Roboter |
| 168 | Distanzmesser mit Abstandsmessung zur Mauer |
| 169 | Mittel zum Positionieren des Roboters in Querrichtung zur Mauer |
| 170 | Mittel zum Positionieren des Roboters in der Höhe |
| 171 | Mittel zum Positionieren des Roboters in Längsrichtung |
| 175 | Gleitschicht, fester Untergrund |
| 176 | überwachende Oberflächenschicht |
| 177 | In der zu überwachende Oberflächenschicht eingebrachter Neigungssensor |
| 178 | Messstelle 1 zur permanenten Erfassung der Fliessbewegung |
| 179 | Messstelle 2 zur permanenten Erfassung der Fliessbewegung |
| 180 | auf die Oberflächenschicht bezogenes Koordinatensysteme |
| 200 | Display- und Manipulationskonsole zum Prozessleitsystem |
| 201 | Manuelle Manipulationsmöglichkeit der Gewichte durch Einzelregler |
| 202 | Einzelregler für Distanz in X-Richtung, hohes Gewicht |
| 203 | Einzelregler für Distanz in X-Richtung, hohes Gewicht |
| 204 | Ausgangslinie für m. Fehler einer Gewichtseinheit (Anzeige,Manipulation) |
| 205 | Schieberegler für "leap-frog"-Überblendregler |
| 206 | Digitalanzeige für Einstellung für mittlerer Fehler an Gewichtseinheit |
| 207 | Einstellregler für mittlerer Fehler an Gewichtseinheit |
| 210 | Anzeigemöglichkeit Genauigkeitsmass [pw, pv] |
| 211 | Anzeigemöglichkeit für Messkonfiguration |
| 212 | Alarmanzeige für Alarmmeldung |
| 213 | Anzeige für Grad der Überbestimmung |
| 214 | Anzeige Einzelgewicht Schieberegler |
| 220 | Baumaschine, Slipformpaver für sog. "Curb&Gutters" |
| 221 | Tachymeter mit Zielerfassung |
| 222 | GPS/DGPS-Empfänger |
| 223 | Neigungsmessgerät, z. B. 2-Achsenmessgerät MOBA 04-21-20305 |
| 224 | Distanzmessung welche in das Lagebestimmungsverfahren eingeführt wird |

## Patentansprüche

1. Verfahren zur Lagebestimmung eines Objektes oder einer Körperlichkeit, welches korrespondierende Passpunkte in einem lokalen und einem übergeordneten Bezugssystem aufweist und die zur Lagebestimmung ermittelten Messinformationen von mindestens einem hybriden geodätischen Messsystem stammen, umfassend die Schritte:

a) Festlegung eines lokalen Koordinatensystems, welches mit der Körperlichkeit in Verbindung steht und eines übergeordneten Koordinatensystems, als korrespondierendes drei-, zwei- oder eindimensionales Passpunktsystem;

b) Überführung der ermittelten Messinformationen in das übergeordnete Passpunktsystem, wobei

- die in Bezug auf die Dimension des Passpunktsystems dimensionsgleich vorliegenden Messinformationen sogenannte Vollpasspunkte bilden,
- die in Bezug auf die Dimension des Passpunktsystems unterbestimmten Messinformationen sogenannte Teilpasspunkte bilden, und in den entsprechenden Komponenten welche zur Unterbestimmung beitragen mit genügend genauen Näherungswerten in den Koordinaten versehen werden und
- die restlichen, nicht auf ein geodätisches Datum bezogenen Messinformationen, sogenannte Relativpasspunkte bilden;

c) Festlegung der Gewichte wobei für die

- Vollpasspunkte, die in Bezug auf das übergeordnete Bezugssystem geltenden Varianz-Kovarianz-Werte bezüglich einer mittleren Gewichtseinheit der Achskomponenten umgekehrt proportional in die Gewichtung einfliessen, für die
- Teilpasspunkte, in den entsprechenden Komponenten welche bezüglich einem Vollpasspunktkriterium einen Defekt aufweisen, ein rechentechnischen Minimalwert oder mit einem die Lagebestimmung nicht verfälschenden Minimalwert eingeführt wird und mit genügend genauen Näherungswerten in den Koordinaten versehen werden und in den übrigen Komponenten mit den bekannten Varianz-Kovarianz-Werten versehen werden und die
- Relativpasspunkte, aus der Umformung aus der Polarform mit den Winkel- bzw. Orientierungsgenauigkeiten bezüglich einer Einheits- oder einer frei wählbaren Vektorlänge, in die kartesische Form mit anschliessender Bestimmung der Varianz-Kovarianz-Werte analog der Teilpasspunktberechnung gebildet werden;

d) Iterative Vornahme von Ähnlichkeitstransformationen von einem lokalen Passpunktsystem an ein übergeordnetes oder umgekehrt, unter Berücksichtigung der messvorrichtungsspezifischen Genauigkeiten oder gruppenweise wählbaren Gewichtung mit den Teilschritten:

d1) Berechnung eines gewichteten Schwerpunktes s aus den kartesischen Koordinaten der Voll- und Teilpasspunkten und den zugehörigen Gewichtsanteilen des lokalen Passpunktsystems und eines gewichteten Schwerpunktes S aus den Koordinaten der Voll- und Teilpasspunkten unter Berücksichtigung den zugehörigen Gewichtsanteile;
d2) Drehung des lokalen Passpunktsystems um den Schwerpunkt s, welcher mit Schwerpunkt S durch eine Translation aufeinandergelegt wird oder alternativ durch Drehen des übergeordneten Passpunktsystems um dessen Schwerpunkt S, welcher mit Schwerpunkt s durch eine Translation aufeinandergelegt wird, unter der Restriktion minimal verbleibender Restklaffungen, wobei zu der Bestimmung der Restklaffungen sowohl die Voll-, die Teilpasspunkte als auch die Relativpasspunkte berücksichtigt werden und die Relativpasspunkte aus der Polarform, mit den Winkel- bzw. Orientierungswerten bezüglich einer Einheits- oder einer frei wählbaren Vektorlänge, in Übereinstimmung mit der Gewichtsbestimmung der Rotationspasspunkte, bestimmt werden;

e) Bestimmung der Transformationsparameter der Ähnlichkeitstransformation falls weitere Punkte, die keine Passpunkte darstellen, vom lokalen in das übergeordnete System oder umgekehrt vom übergeordneten in das lokale System umzurechnen sind und anschliessender Berechnung dieser weiteren Punkte.

**2.** Verfahren gemäss Anspruch 1 **dadurch gekennzeichnet, dass** die Restriktion verbleibender minimalen Restklaffungen von der Methode der gewichteten kleinsten Quadrate vorgegeben wird.

**3.** Verfahren gemäss den vorangehenden Ansprüchen **dadurch gekennzeichnet, dass** sich ein Genauigkeitsmass aus der quadratisch gewichteten Summe der Restklaffungen ($v^T p v$) gebildet wird.

**4.** Verfahren gemäss den vorangehenden Ansprüchen, **dadurch gekennzeichnet, dass** die Gewichte welche in die Lagebestimmung eingehen, einzeln oder gruppenweise, variiert werden können.

5. Verfahren gemäss den vorangehenden Ansprüchen **dadurch gekennzeichnet, dass** das Objekt für welche eine Lagebestimmung ausgeführt werden soll, aus einer Baumaschine oder einem Fertigungsroboter mit mindestens einem assoziierten Werkzeugteil besteht.

6. Verfahren gemäss den Ansprüchen 1 bis 4, **dadurch gekennzeichnet dass** die Körperlichkeit für welche eine Lagebestimmung ausgeführt werden soll, aus einem Bereich der Erdoberfläche besteht, welcher periodisch gegenüber einem Referenzzustand verglichen werden soll.

7. Verfahren gemäss den vorangehenden Ansprüchen **dadurch gekennzeichnet, dass** eine hybrides geodätisches Messsystem von mindestens einer GPS-Messvorrichtung und mindestens einer tachymetrischen Totalstation gebildet wird, wobei die Varianz-Kovarianz-Werte der Gewichtseinheit der aus einer a priori Schätzung abgeleitet werden oder aus einer Zeitreihenanalyse bzw. einer Netzausgleichung bestimmt werden.

8. Verfahren gemäss den vorangehenden Ansprüchen **dadurch gekennzeichnet, dass** eine Distanzmessvorrichtung eine Messvorrichtung darstellt und im Falle einer 2 oder 3-dimensionalen Lagebestimmung mit den Messinformationen als Vollpasspunkt in die Lagebestimmung eingeht und die Gewichte in den einzelnen Achsrichtungen aus einer Hauptachsentransformation abgeleitet werden, wobei von einer in Distanzmessrichtung abgeleiteter Genauigkeit ausgegangen wird und die Horizontal- und Vertikalgenauigkeiten mit einem rechentechnisch geeigneten kleinen Gewicht beaufschlagt werden.

9. Verfahren gemäss den vorangehenden Ansprüchen **dadurch gekennzeichnet, dass** ein nivellitisches Instrument eine Messvorrichtung darstellt und im Falle einer 2 oder 3-dimensionalen Lagebestimmung mit den Messinformationen als Teilpasspunkt einfliesst, die Z-Komponente durch das Messresultat welches in das übergeordnete Messsystem umgerechnet wird und die restlichen Komponenten ein rechentechnisch geeignetes kleines Gewicht, nahe dem Nullwert, erhalten.

10. Verfahren gemäss den vorangehenden Ansprüchen **dadurch gekennzeichnet, dass** ein mit der Körperlichkeit in Beziehung stehendes Neigungsmessgerät eine Messvorrichtung darstellt und mit den Messinformationen als Relativpasspunkt in die Lagebestimmung eingeht.

11. Vorrichtung zur Durchführung eines Verfahrens nach Anspruch 1 die Vorrichtung umfassend ein Prozessleitsystem (40) bestehend aus einer datenprozessierenden Einheit (41) mit geeigneten Anzeigeelementen (42), Eingabemitteln (43), Interfaces (44), Programm- und Datenspeichermittel (45) sowie mit dem Messsystem kommunizierenden Messsensoren (46) welche zur Lagebestimmung einer Körperlichkeit verwendet werden.

12. Vorrichtung gemäss Anspruch 11 **dadurch gekennzeichnet, dass** zeitlich und messtechnisch unterschiedliche Messkonfigurationen verarbeitbar sind.

13. Vorrichtung gemäss den Ansprüchen 11 und 12 **dadurch gekennzeichnet, dass** mit der Vorrichtung eine Anzeigeeinheit verbindbar ist, welche ein Genauigkeitsmass der Restklaffungen anzeigt.

14. Vorrichtung gemäss Anspruch 11 **dadurch gekennzeichnet, dass** eine Bedieneinheit vorhanden ist, mit welcher die Gewichte individuell oder gruppenweise eingegeben oder variiert werden können.

15. Verwendung des Verfahrens zur Lagebestimmung eines Objektes gemäss Anspruch 1 **dadurch gekennzeichnet, dass** durch Simulationsrechnungen die zum Einsatz gelangenden Sensoren und der Passpunktgeometrie bezüglich dem a priori Genauigkeitsverhalten untersucht werden.

**Claims**

1. Method for determining the position of an object or a rigid body having corresponding control points in a local and a superordinate reference system and measured input variables sourced from at least one hybrid measurement system comprising the steps of:

    a) Definition of a local coordinate system, which is related to the object, and a superordinate coordinate system as a three-, two- or one-dimensional control point system;

b) conversion of the acquired measurement values in the superordinate control point system, wherein the measurement values having the same order as the control point system, constituting a so called full control point, the measurement values being under-determined in relation to the to the control point system constitute a so called partial control point, wherein the components causing the under-determination are provided with adequate approximated values and the measurement values not related to a geodetic datum constituting a so called relative control point;

c) Definition of the weights, wherein

   - for the full control points, the related variance-covariance values of the superordinate values, influencing the weight determination, are based on a unified variance unit weight and reciprocally proportional based to each axis component,
   - for the partially control points, a minimal value is introduced on these corresponding components causing a defect related to the criteria of full control system or a value not affecting the overall position determination value and set with sufficient accurate approximation coordinates and for the remaining known components set with the known variance-covariance values and
   - for the relative control points, with transformation from polar to cartesian form with angular respectively orientation accuracies, related to a unitary or a free selectable vector length, followed by a variance-covariance determination similar to the calculation of partial control points;

d) Performing of an iterative similarity transformation from a local control system to a superordinate control system or vice-versa, taking into account the measurement specific accuracies or the group specific weights with the sub steps:

   d1) Calculation of a weighted point of gravity s from cartesian full and partial control points and the related weights of the local control point system and calculation of a weighted point of gravity S from coordinates of the full and partial control points under consideration of the respectively weights,
   d2) Rotation of the local control point system around center of gravity S which is made congruent with the centre of gravity S by translation or alternatively by rotation of the superordinate pass point system around center of gravity S which is made congruent with center of gravity s by translation under restriction of minimal remaining residuals, wherein for the determination of the residuals full control points as well as partial control points are taken into account and the relative control points from polar form, with the angular respectively orientation angles in relation to a free selectable unit or free selectable vector length, according to the determination of the weight determination process of the rotational control points;

e) Determination of the transformation parameters of the similarity transformation, if additional points, not building control points, have to be transformed from the local system to the superordinate or the opposite way around from the superordinate system to the local system followed by the calculation of these additional points.

2. Method according claim 1 **characterized in that** the restriction of minimized residuals is determined by the method of least square.

3. Method according precedent claims **characterized in that** an accuracy identifier is determined from the weighted sum of the residuals ($v^T pv$).

4. Method according precedent claims **characterized in that** weights influencing the position determination are variable either individually or group wise.

5. Method according precedent claims **characterized in that** the object on which a position determination has to be applied is made up of a construction machine or a manufacturing robot with at least an associated working tool.

6. Method according claims 1 to 4 **characterized in that** the object to be determined on his position is a region of the surface of the Earth, which has to be monitored periodically in relation to a reference cycle.

7. Method according precedent claims **characterized in that** a hybrid geodetic measuring system is built by at least one GPS-measurement sensor and at least one tachymetrically determined total station, wherein the variance-covariance values of the weight unit is derived from an a priori estimation or a time-series analyse respectively a network adjustment calculation.

8. Method according precedent claims **characterized in that** a distance measurement device is determining the measuring system, and in case of a 2- or 3-dimensional position determination on which the measurement information will be treated as full control point in the calculation process and the axe related weights will be derived from main axis transformation, wherein the accuracy is derived from the distance measurement device and the vertical- and horizontal accuracies are set with a appropriate small value in terms of calculation.

9. Method according precedent claims **characterized in that** a level is determining the measuring system, and in case of a 2- or 3-dimensional position determination the measurement information will be treated as partial control point in the calculation, the Z-component on which the measuring result has to be transformed and has to be set with an appropriate small value in terms of calculation.

10. Method according precedent claims **characterized in that** a slope measurement device coupled to the rigid body is determining the measuring system, and in case of a 2- or 3-dimensional position determination, the measurement information will be treated as relative control point in the calculation.

11. Device for utilizing a method according claim 1 with a processor unit (40) comprising a data processing unit (41) with appropriate display means (42), input means (43), interface units (44), program- and data memory means (45) as well as sensors (46) communicating with the measurement system for the position determination of an object.

12. Device for utilizing a method according claim 11 **characterized in that** measurement setups with different time- and measurement specific properties can be applied.

13. Device for utilizing a method according claim 11 and 12 **characterized in that** a display unit is connectable to the device, the display indicating a residual related accuracy identifier.

14. Device for utilizing a method according claim 11 **characterized in that** a commander unit is present, allowing the variation of weights either individually or in groups.

15. Utilizing the method for determination of the position according claim 1 **characterized in that** sensors to be implemented and the geometry of the control points can be investigated in relation to the a priory accuracies by numerical simulation.

**Revendications**

1. Procédé pour déterminer la position d'un objet physique ou d'un corporéité en employant des points d'appui correspondant dans des systèmes de référence local et supérieur au moyen au moins d' un système de mesure géodésique comprenant les étapes suivantes consistent à:

   a) Définition d'un système de coordonnées local qui est en relation avec l'objet physique, ainsi que d'un système de coordonnées supérieur en tant que système de points d'appui correspondant à trois, deux ou une dimension;
   b) Transfert des données de mesure obtenues dans le système de points d'appui supérieur, tout en respectant les critères,

      - les données de mesure qui partagent la même dimension avec le système de points d'appui forment les points d'appui dit entiers,
      - les données de mesure subordonnées par rapport à la dimension du système de points d'appui forment des points d'appui dits partiels et sont munis de d'indications de proximité exactes dans les coordonnées des composants relatifs nécessaires à la définition des subordonnées et
      - les données restant, qui ne se réfèrent pas à des données des mesures d'une date géodésique, forment des points d'appui dits relatifs;

   c) Définition des poids, en respectant que

      - pour les points d'appui entiers, les valeurs de variance et covariance valables dans le système de rapport supérieur influencent pondéralement de manière proportionnelle inversée par rapport à une unité de poids moyenne des composantes de l'axe,
      - pour les points d'appui partiels qui se trouvent dans les composantes correspondantes et qui présentent un défaut par rapport à un système de points d'appuis entiers, une valeur minimale calculable qui ne falsifie pas la détermination de position est introduite et munie de valeurs de proximité suffisamment précises dans le système de repères;

- Les points d'appui relatifs sont formés à partir de la déformation de la forme polaire avec les précisions d'angle ou de l'orientation par rapport à une longueur de vecteur unitaire ou choisie librement dans la forme cartésienne, suivi d'une définition des valeurs de variance et covariance analogique au calcul des points d'appui;

d) Entreprise itérative de transformations de ressemblance depuis un système de points d'appui local vers un système subordonné ou vice-versa, tout en respectant les précisions liées aux instruments de mesure ou la pondération selon des groupes comprenant les étapes;

d1) Calcul d'un centre de gravité pondéré s à partir des coordonnées cartésienne des points d'appui entiers et partiels et des parts de poids y appartenant du système de points d'appui local, calcul d'un centre de gravité pondéré S à partir des coordonnées des points d'appui entiers et partiels, tout en respectant les parts de poids y appartenant;

d2) Rotation du système de points d'appui autour du centre de gravité s, qui et posé sur S par translation ou, alternativement, par rotation du système d'appui supérieur autour de son centre de gravité S, qui est posé avec s l'un sur l'autre par translation, sous restriction de résidus minimaux dont pour la définition sont utilisés les points d'appui entiers, partiels et relatifs, ces derniers étant définis à partir de la déformation de la forme polaire avec les précisions d'angle ou de l'orientation par rapport à une longueur de vecteur unitaire ou choisie librement, en accord avec la définition du poids des points de rotations;

e) Définition des paramètres de transformation de la transformation dissimilitude si d'autres points, qui ne sont pas de points d'appui, doivent être recalculé du système local au système supérieur ou vice-versa, et ensuite calcul de ces points supplémentaires..

2. Procédé selon la revendication 1 **caractérisée par le fait que** la restriction de résidus minimaux restants est prescrite par le procédé les plus petits résidus pondérés.

3. Procédé selon les revendications précédentes **caractérisée par le fait qu'**une mesure de précision est formée à partir de la somme des plus petits résidus pondérés ($v^T pv$).

4. Procédé selon les revendications précédentes **caractérisée par le fait que** les poids pertinents pour déterminer la position peuvent varier individuellement ou par groupes.

5. Procédé selon les revendications précédentes **caractérisée par le fait que** l'objet dont la position est à définir est incorporé par une machine ou un robot de construction avec au moins un outil associé.

6. Procédé selon les revendications 1 à 4 **caractérisée par le fait que** l'objet physique dont la position est à définir est incorporé par une partie de la surface terrestre qui doit être comparée périodiquement par rapport à son état de référence.

7. Procédé selon les revendications précédentes **caractérisée par le fait qu'**un système géodésique hybride est établi à l'aide d'au moins un appareil GPS et d'au moins une station tachymétrique, et que les valeurs de variance et covariance de l'unité de poids est établi à l'aide d'une estimation a priori ou à l'aide d'une analyse ou d'une égalisation du réseau.

8. Procédé selon les revendications précédentes **caractérisée par le fait qu'**une installation pour mesurer la distance représente un système géodésique et que dans le cas d'une définition de position en 2 ou 3 dimensions il entre avec les informations de mesure dans la définition de la position en tant que point d'appui entier et que le poids dans les différentes directions d'axe sont déduits de la transformation de l'axe principale, en partant d'une précision déduite dans la direction de la mesure de distance et en adaptant par calcul les précisions horizontale et verticale par l'ajout d'un petit poids.

9. Procédé selon l'une des revendications précédentes **caractérisée par le fait qu'**un instrument de nivellement représente une installation de mesure et complète en tant que point d'appui partiel les informations de mesure dans une définition de position en 2 ou 3 dimensions, la composante Z par le résultat de mesure adapté au système de mesure supérieur et les composants restant par un petit poids calculé et près de zéro.

**10.** Procédé selon les revendications précédentes **caractérisée par le fait qu'**un appareil de mesure d'inclinaison, qui est en rapport avec l'objet physique, représente un instrument de mesure et entre dans la définition de position avec les informations de mesure en tant que point d'appui relatif.

**11.** Dispositif pour la mise en oeuvre d'un procédé selon la revendication 1 comprenant un superviseur de processus (40) qui contient une unité de traitement des données (41) avec des éléments d'affichage (42) adaptés, des moyens d'entrée (43), des interfaces (44), des moyens pour enregistrer les logiciels et données (45) ainsi que des senseurs de mesures communicant avec le système de mesure.

**12.** Dispositif selon la revendication 11 est **caractérisé par** la possibilité de traiter des configurations de mesure temporellement et techniquement différentes.

**13.** Dispositif selon les revendications 11 et 12 est **caractérisé par** la possibilité d'y lier une unité d'affichage qui indique la précision des résidus restants.

**14.** Dispositif selon revendication 11 est **caractérisé par** la existence d'une unité de commande qui permet d'entrer les poids individuellement, par groupes ou variés.

**15.** L'utilisation du procédé pour déterminer la position d'un objet selon la revendication 1 **caractérisé par le fait qu'**à l'aide de calculs de simulation, les senseurs utilisés sont examinés selon la géométrie des points d'appui par rapport au comportement de précision a priori.

1. $\displaystyle\sum_{i=1}^{n}\left(P_{X^\circ X}^\circ\Delta x + P_{X^\circ Y}^\circ\Delta Y + P_{X^\circ Z}^\circ\Delta z\right)_i = 0$

2. $\displaystyle\sum_{i=1}^{n}\left(P_{Y^\circ X}^\circ\Delta x + P_{Y^\circ Y}^\circ\Delta Y + P_{Y^\circ Z}^\circ\Delta z\right)_i = 0$

3. $\displaystyle\sum_{i=1}^{n}\left(P_{Z^\circ X}^\circ\Delta x + P_{Z^\circ Y}^\circ\Delta Y + P_{Z^\circ Z}^\circ\Delta z\right)_i = 0$

4. $\displaystyle\sum_{i=1}^{n}\left[\left(Y^\circ P_{Z^\circ X}^\circ - Z^\circ P_{Y^\circ X}^\circ\right)\!\Delta x + \left(Y^\circ P_{Z^\circ X}^\circ - Z^\circ P_{Y^\circ X}^\circ\right)\!\Delta Y + \left(Y^\circ P_{Z^\circ X}^\circ - Z^\circ P_{Y^\circ X}^\circ\right)\!\Delta z\right]_i = 0$

5. $\displaystyle\sum_{i=1}^{n}\left[\left(Z^\circ P_{X^\circ X}^\circ - X^\circ P_{Z^\circ X}^\circ\right)\!\Delta x + \left(Z^\circ P_{X^\circ Y}^\circ - X^\circ P_{Z^\circ Y}^\circ\right)\!\Delta Y + \left(Z^\circ P_{X^\circ Z}^\circ - X^\circ P_{Z^\circ Z}^\circ\right)\!\Delta z\right]_i = 0$

6. $\displaystyle\sum_{i=1}^{n}\left[\left(X^\circ P_{Y^\circ X}^\circ - Y^\circ P_{X^\circ X}^\circ\right)\!\Delta x + \left(X^\circ P_{Y^\circ Y}^\circ - Y^\circ P_{X^\circ Y}^\circ\right)\!\Delta Y + \left(X^\circ P_{Y^\circ Z}^\circ - Y^\circ P_{X^\circ Z}^\circ\right)\!\Delta z\right]_i = 0$

Fig. 1

Fig. 2

**Fig. 3**

**Fig. 4**

Fig. 5

**Fig. 6**

**Fig. 7**

**Fig. 8**

**9**

**9´**

$$\Delta_{x_i} =$$

**Fig. 9**

**16**

**17**

**Fig. 10**

a) Festlegung:
• Maschinen-. Ortskoordinatensystem (x,[y,z])
• übergeordnetes Koordinatensystem (X,[Y,Z])

↓

b) Überführen der Messinformationen
in das übergeordnete Passpunktsystem
(X,[Y,Z]) und individuellle Determination ob Voll-,
Teil- oder Relativpasspunkt

↓

Neugewichtung

c) Einführen der Gewichte
Bezüglich des übergeordneten
Passpunktsystem (X,[Y,Z])

↓

d) Vornahme Ähnlichkeitstransformation
(Translation/Rotation)

• d1) Berechnung des gewichteten Schwerpunktes des Passpunktsystemes im übergeordneten System $S_{(X,[Y,Z])}$ und des
gewichteten Passpunktsystemes im
Maschinen- oder Ortskoordinatensystem
$s_{(x,[y,z])}$ aus den Voll- und Teilpasspunkten
(ohne Relativpasspunkte) → ergibt Translationskomponente der Ähnlichkeitstransformation
• d2) Drehung des lokalen Passpunktsystemes um den Punkt s, welcher mit dem
Schwerpunkt S zusammengelegt wird unter
der Restriktion minimal verbleibender
Restklaffungen bezüglich den Voll-, Teil-,
Relativpasspunkten → ergibt Rotationskomponente der Ähnlichkeitstransformation

Bildung der Transformation aus Drehung und
Rotation

Messinformationen
(neue Epoche)

↓

e) Bestimmung der Transformationsparameter
der Ähnlichkeitstransformation falls weitere
Punkte welche keine Passpunkte darstellen
transformiert werden sollen

**Fig. 11**

**Fig. 12**

**Fig. 13**

**Fig. 14**

**Fig. 15**

**Fig. 16**

**Fig. 17**

**115**

**14**

**110**

**111**

**112**

**114**          **113**

**Fig. 18**

**124**

**123**

**122**

**121**

**120**

**Fig. 19**

**134**

**132**

**132**

**131**

**130**

**b**

**a**

**139**

**138**

**137**

**135**

**Fig. 20**

**141**

**141**

**143**

**144**

**144**    **140**

**142**

**143**

**Fig. 21**

**156** **155**

**150**

**152**

**151**

**154**

**153**

**Fig. 22**

**156**

**157**

**158**

**155**

**157**

**154**

**Fig. 23**

163

162    164

165

161

160    167    166

171    168

170    169

**Fig. 24**

179

$z_1$    $z_2$    180    178

177

176

175

**Fig. 25**

**Fig. 26**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1079029 A2

- US 7139651 B2

**In der Beschreibung aufgeführte Nicht-Patentliteratur**

- **HELLMUT H. SCHMID.** Anfelderung eines Netzes unter der Bedingung ∆xTPx ∆x = Minimum. *Eidgenössische Technischen Hochschule Zürich, Institut für Geodäsie und Photogrammetrie,* 1980